# EUROPÄISCHE PATENTSCHRIFT

(11) **EP 1 395 512 B1**
(45) Veröffentlichungstag und Bekanntmachung des Hinweises auf die Patenterteilung: **12.11.2008**
(21) Anmeldenummer: 02778862.9
(22) Anmeldetag: 29.05.2002
(51) Int. Cl.: B66F 9/07

(54) **REGALBEDIENGERÄT**
LOADING/UNLOADING DEVICE FOR SHELVING
SERVEUR POUR RAYONNAGES

(30) Priorität: 13.06.2001 AT 9252001; 12.04.2002 AT 5752002
(43) Veröffentlichungstag der Anmeldung: 10.03.2004
(73) Patentinhaber: TGW Mechanics GmbH, 4600 Wels (AT)
(72) Erfinder: HANSL, Rudolf, A-4813 Altmünster (AT); SCHWINGSHANDL, Thomas, A-4061 Pasching (AT); ENSINGER, Wolfgang, A-4611 Buchkirchen (AT); ASCHAUER, Herbert, A-4616 Weisskirchen (AT)
(74) Vertreter: Secklehner, Günter
(86) Internationale Anmeldenummer: PCT/AT2002/000164
(87) Internationale Veröffentlichungsnummer: WO 2002/100759

(56) Entgegenhaltungen:
- DE-A- 1 477 603
- DE-A- 19 534 291
- US-A- 2 696 763
- US-A- 4 658 485
- US-A- 5 033 784

## Beschreibung

Die Erfindung betrifft ein Regalbediengerät und eine Regalbedienanlage entsprechend den Merkmalen in den Oberbegriffen der Ansprüche 1 und 35.

Es ist bereits eine Vielzahl von Regalbediengeräten bekannt geworden, die sich in der Art und Anordnung der Antriebe sowie in der konstruktiven Ausgestaltung des Mastes, nämlich Einmastsystem oder Zweimastsystem, wesentlich unterscheiden.

In der DE 44 05 952 A1 ist ein mit einem Mast ausgebildetes Regalbediengerät beschrieben, das über wegesynchron gesteuerte obere und untere Antriebe verfahren wird. Es handelt sich um ein in einer Gasse geführtes Regalbediengerät, an dessen Mast ein die Lasten aufnehmender Hubwagen verfährt. Das Regalbediengerät leitet sein Eigengewicht und das Gewicht der aufzunehmenden Lasten über eine mitlaufende Rolle in die Fahrstraße ein. Gemäß einer Weiterbildung dieser Erfindung wird der Mast in Gassenrichtung im unteren und oberen Bereich über angetriebene Zahnräder in ortsfest angeordnete Zahnstangen abgestützt. Die Wegesynchronität wird entweder durch elektrische Synchronisation oder durch mechanische Koppelung der beiden Antriebe erzielt. Durch getrennte Messung der Fahrwege und permanenten Ausgleich von Abweichungen durch Beschleunigen oder Abbremsen zumindest eines Fahrantriebes werden der Mastfuß und Mastkopf lotrecht übereinander gehalten. Nachteilig ist bei diesem Regalbediengerät die Zwängungsgefahr des Zahnstangenantriebes infolge Schiefstellung des Mastes bei Versagen der elektrischen Synchronisation. Durch die abhängig von der Hubwagenstellung ungleiche Massenträgheit von Mastfuß und Mastkopf sind größere Bremswegdifferenzen zwischen unterem und oberem Fahrantrieb und damit auch Schiefstellungen des Mastes zu erwarten. Dies bewirkt bei dem vorliegenden Regalbediengerät eine starke Zwängung der im Eingriff stehenden Zahnflanken des Zahnstangenantriebes, die zu Schäden führen kann.

In der EP 0 621 231 A1 ist ein Regalbediengerät ähnlich dem vorgenannten erwähnt, bei dem die angetriebenen Zahnräder der drehzahlsynchron gesteuerten Fahrantriebe zum Ausgleich von Winkelfehlern bzw. zur Vermeidung von Zwängungen kardanisch gelagert sind.

Gleiche Systeme mit formschlüssig wirkenden Fahrantrieben sind auch bereits aus der CH 518 862 und der CH 518 863 bekannt geworden. Der Mast wird am Mastfuß und am Mastkopf mit seitlich angeordneten Führungsrollen an Fahrschienen geführt und stützt sich in Fahrtrichtung formschlüssig über zwei Ritzel einer vertikalen Verbindungswelle in je einer oberen und unteren ortsfesten Zahnstange ab. Das Regalbediengerät leitet die vertikalen Kräfte über ein Laufrad in die untere Fahrschiene ein. Durch die Zwangsführung des Mastfußes und Mastkopfes kann auf einen horizontalen Radabstand verzichtet werden. Nachteilig bei diesem Regalbediengerät ist der hohe mechanische Aufwand für die Verbindungswelle und deren Lagerung am Mast sowie die sehr hohen Kosten für die obere und untere Zahnstange und deren präzise Verlegung in der Gasse der Regalanlage. Zusätzlich neigt dieses Regalbediengerät bei hohen Regalanlagen zu kaum beherrschbaren massendynamischen Schwingungen, weil die extrem lange Verbindungswelle sehr verdrehweich ist und unter dynamischen Einflüssen wie eine Torsionsfeder wirkt.

Zudem treten bei den oben genannten Regalbediengeräten nach der DE 44 05 052 A1, EP 0 621 231 A1, CH 518 862 und CH 518 863 konstruktiv bedingte Geräusch-, Schmier- und Verschleißprobleme und relativ hohe Material-, Montage- und Wartungskosten für die Zahnstangen auf. Durch die hohe Geräuschentwicklung ist ferner ein Einsatz der oben genannten Regalbediengeräte nur begrenzt möglich. Die vorstehenden Nachteile sind so gravierend, daß sich diese Regalbediengeräte bisher am Markt nicht durchsetzen konnten.

Die vorgenannten Nachteile wurden durch die Verwendung von reibschlüssig wirkenden Fahrantrieben vermieden. Ein derartiger Antrieb eines Regalbediengerätes ist aus der DE 44 08 123 A1 bekannt, welcher ein auf mindestens einer Bodenschiene fahrbares, antreibbares Fahrwerk mit zwei sich auf der Bodenschiene abstützenden, massetragenden Lasträder aufweist. Die Lasträder nehmen dabei nur die Masse des gesamten Regalbediengerätes auf und das Antriebsdrehmoment wird von mindestens einem separaten Reibrad, welches an dem Steg der Bodenschiene angreift, von einem Motor unmittelbar auf das Fahrwerk des Regalbediengerätes übertragen. Die Fahrschienen sind als Doppel-T-Träger oder als T-Träger ausgebildet, wobei dessen Steg senkrecht zum Fußboden steht. Die Lasträder liegen auf dem Ober- bzw. Untergurt der Fahrschienen abrollbar an, während am Steg das Reibrad angreift. Die Reibräder werden mit einer vordefinierbaren Andruckkraft an den Steg angedrückt. Diese Andruckkraft ist mittels eines Drehschemels manuell einstellbar oder automatisch regelbar. Nachteilig dabei ist, daß die an gegenüberliegenden Führungsbahnen des Steges anliegenden bzw. sich abwälzenden Antriebsrollen gleichermaßen als Seitenführungsorgane für das den Antrieb aufweisende Fahrwerk dienen. Ist ein Mast eines Regalbediengerätes an seinem Mastfuß und Mastkopf mit einem derartig angetriebenen Fahrwerk ausgestattet, wird infolge einer gegebenenfalls eintretenden Schiefstellung des Mastes aus seiner lotrechten Ausrichtung und/oder bei gegebenenfalls quer zur Gassenrichtung einwirkenden Kräften ein erhöhter reibungsbedingter Verschleiß der Antriebsrollen hervorgerufen, so daß diese Fahrwerke nur an Regalbediengeräten mit niedrigen Verfahrgeschwindigkeiten und kleiner Baugröße einsetzbar sind. Schon aus diesem Grunde ist das Einsatzgebiet von mit diesen Fahrwerken ausgestatteten Regalbediengeräten stark eingeschränkt und ist deren Einsatz für moderne Kommissionieranlagen, wo Fahrgeschwindigkeiten von bis zu 7 m/sec und Masthöhen von bis zu 20 m sowie ein niedriger Wartungsaufwand gefordert sind, nicht oder nur stark eingeschränkt möglich. Zudem führen alleinig die am Mast während des Betriebes auftretenden systembedingten Verformungen zwangsweise zu einer Anstellung der Antriebsrollen und zu dem zuvor erwähnten erhöhten reibungsbedingten Verschleiß.

In der DE 195 34 291 A1 und DE 196 14 660 A1 sind Regalbediengeräte vorgeschlagen, die die oben genannten Nachteile weitestgehend beseitigen. Derartige Regalbediengeräte weisen einen Mast mit auf diesem verfahrbaren Hubwagen auf, der mit am Mastfuß und Mastkopf angeordnetem, jeweils mit einem Antrieb ausgestattetem Fahrwerk an der unteren und oberen Fahrschiene geführt und abgestützt ist. Der Mastfuß und Mastkopf ist jeweils am unteren und oberen angetriebenen Fahrwerk an einem Gelenk befestigt, wobei jedes Fahrwerk zwei antreibbare, reibschlüssig wirkende Laufräder aufweist, die beidseitig des Gelenks in Gassenrichtung hintereinander auf den einander zugewandten Ober- und Untergurten der unteren und oberen Fahrschiene abrollbar anliegen. Den Laufrädern sind an abgewandten Seiten des Ober- und Untergurtes zur Verbesserung des Kraftschlusses zwischen den Laufrädern und Fahrschienen anpreßbare Gegenrollen zugeordnet. Die Laufräder und Gegenrollen sind aus Kunststoff, insbesondere einem Elastomer, gebildet. Derartige Regalbediengeräte weisen den Nachteil auf, daß die antreibbaren Laufräder einerseits zum Beaufschlagen des Fahrwerkes mit einer Vorschubbewegung in Gassenrichtung und andererseits zum Abtragen des Eigengewichtes des Mastes und der aufzunehmenden Lasten ausgebildet sind und dadurch bei hohen aufzunehmenden Lasten hohe Reibkräfte zwischen den Laufrädern und insbesondere der unteren Fahrschiene entstehen und gleichermaßen das erforderliche Antriebsmoment des Antriebsmotors stark angehoben werden muß, wodurch mit Mehrkosten für die Herstellung des Regalbediengerätes und mit einem erhöhten Platzbedarf infolge der robust auszulegenden Antriebsmotoren der Fahrwerke zu rechnen ist.

Die Aufgabe der Erfindung ist es ein einfach aufgebautes, hochdynamisches wartungs- und verschleißarmes Regalbediengerät zu schaffen, bei dem die mechanischen Belastungen auf die Führungsorgane der Fahrantriebe verringert sowie die Verfügbarkeit angehoben werden.

Die Aufgabe der Erfindung wird durch die Merkmale im Anspruch 1 gelöst. Der Vorteil liegt darin, daß durch die getrennte Bauweise der Fahrwerke und Fahrantriebe sowie deren Antriebsverbindung über die Kupplungsvorrichtungen die Fahrwerke statische und dynamische Massenkräfte aufzunehmen haben, während die in ihrer Baugröße klein bemessenen und eigenständig geführten Fahrantriebe ausschließlich die Vorschubbewegung für das Regalbediengerät herstellen und keine Lasten des Regalbediengerätes und der zu transportierenden Lasten abtragen müssen, wodurch ein über lange Einsatzdauer weitestgehend wartungsfreier Betrieb des Regalbediengerätes ermöglicht wird und im weiteren die Fahrdynamik wesentlich angehoben werden kann.

Von Vorteil sind auch die Weiterbildungen nach den Ansprüchen 2 und 3, wodurch die an den quer zur Längserstreckung der Führungsbahnen der Fahrschienen versetzt angeordneten Kupplungsteile bzw. Anlenkpunkte am unteren und oberen Fahrwerk oder Mastfuß und Mastkopf angreifenden Vorschubkräfte des unteren und oberen Fahrantriebes eine Reduzierung der mechanischen Belastung auf das Höhenführungsorgan und den das Höhenführungsorgan abstützenden Führungsbahnteil der unteren Fahrschiene während des Verfahrens des Mastes entlang der Fahrschienen bewirken.

Gemäß Anspruch 4 ist durch die Fahrwerke eine eigenständige Führung des Mastes in Richtung der Höhe und Seite gegeben.

Von Vorteil sind auch die Weiterbildungen nach den Ansprüchen 5 bis 7, wodurch ein der Höhe und Seite nach geführter und eine eigene Baueinheit bildender, gegenüber der Fahrschiene verdrehgesicherter Fahrantrieb geschaffen wird, der kleinbauend und kostengünstig herzustellen ist.

Unterschiedliche vorteilhafte konstruktive Ausgestaltungen der Fahrantriebe sind in den Ansprüchen 8 und 9 beschrieben.

Gemäß Anspruch 10 wird durch die Verwendung von Elastomeren oder Stahl mit Kunststoffummantelungen für die Höhen- und Seitenführungs- und Antriebs- und Andrückorgane der Fahrwerke und Fahrantriebe eine Geräuschminimierung während des Betriebes des Regalbediengerätes erreicht. Weiters ist von Vorteil, daß diese Materialien einen hohen Kraftschlupfbeiwert aufweisen, der die Übertragung der erforderlichen Antriebskräfte auch bei hohen Beschleunigungen und Verzögerungen ermöglicht. Durch die geräuschminimierenden Maßnahmen wird erreicht, daß das Regalbediengerät auch bei sehr hohen Fahrgeschwindigkeiten einen niedrigen Schalldruckpegel erzeugt und daher auch im Aufenthaltsbereich von Personen eingesetzt werden kann.

Von Vorteil ist auch die Ausgestaltung nach Anspruch 11, wodurch der vertikale Verstellweg bzw. die Höhenverstellung des Lastaufnahmemittels entlang und im wesentlichen über die gesamte Höhe des Mastes möglich ist.

Nach den Ausgestaltungen entsprechend den Ansprüchen 12 und 13 bilden der Fahrantrieb und das Fahrwerk jeweils eine eigene Baueinheit aus, die über zumindest eine Kupplungsvorrichtung bevorzugt lösbar miteinander gekoppelt bzw. verbunden sind. Das untere und das obere Fahrwerk führen den Mast in Richtung seiner Höhe und Seite und bilden ein selbstabstützendes System, was den Vorteil mit sich bringt, daß ein beispielsweise störungsbehafteter Fahrantrieb nach dem Abkoppeln bzw. Lösen der Verbindung zwischen dem Fahrwerk und Fahrantrieb dieser von der Fahrschiene entfernt und ein bereitgestellter Fahrantrieb sofort wieder an der Fahrschiene angeordnet werden kann. Dadurch können kostenintensive Stillstandszeiten reduziert werden und sind erforderliche Instandhaltungs- und/oder Wartungsarbeiten an diesem Fahrantrieb außerhalb des Arbeitsbereiches des Regalbediengerätes einfach durchführbar.

Von Vorteil sind auch die Weiterbildungen nach den Ansprüchen 14 bis 16, wodurch bei einer gegebenenfalls eintretenden Abweichung des Mastes aus einer Senkrechtstellung, der die Seitenführungsorgane tragende, verschwenkbeweglich am Fahrwerk gelagerte Fahrschemel selbsttätig in eine vorbestimmbare, horizontale Lage verbracht wird, in der die Seitenführungsorgane parallel zur Gassenrichtung verlaufen, und ein durch mögliches Schrägstellen der Seitenführungsorgane hervorgerufener Verschleiß vermieden werden kann. Die mehrere Funktionen aufweisende wippenartige Abstreifleiste dient einerseits als Reinigungsvorrichtung für die Führungsbahnen, insbesondere Fahrschienen, und andererseits als Abstützelement für die zwischen der Basis und diesem angeordneten Rückstellelemente, die dafür sorgen, daß bei einer Schiefstellung des Mastes der Fahrschemel bzw. die Seitenführungsorgane in eine horizontale Lage selbsttätig verbracht wird bzw. werden und auf diese Weise in jeder Betriebsstellung des Mastes eine optimale Seitenführung desselben erreicht wird.

Gemäß einer Weiterbildung nach Anspruch 17, sind die Vorschubkräfte der Fahrantriebe auf die Fahrwerke ruckfrei übertragbar.

Vorteilhaft sind auch die Weiterbildungen nach den Ansprüchen 18 bis 20, wodurch eine, hohe Vorschubkräfte übertragende Kupplungsvorrichtung geschaffen wird, die eine spielfreie Übertragung der Vorschubkraft des Fahrantriebes auf den Mast, insbesondere das Fahrwerk, ermöglicht.

Eine vorteilhafte Anordnung und konstruktive Ausgestaltung einer Kupplungsverbindung ist im Anspruch 21 angegeben.

Die Ausgestaltungen nach den Ansprüchen 22 und 23 sehen vor, daß selbst bei eventueller unzulässiger Schiefstellung des Mastes die Gefahr des seitlichen Wegkippens oder Abstürzens des Mastes verhindert wird. Diese mechanische Sicherung ist einfach aufgebaut und kostengünstig herzustellen und ist die Anordnung des Aushebeschutzes an dem Mastfuß und Mastkopf einfach möglich.

Von Vorteil ist auch die Weiterbildung nach Anspruch 24, wodurch der Standort des Regalbediengerätes innerhalb eines vorbestimmbaren Arbeitsbereiches und/oder die Position des Lastaufnahmemittels am Regalbediengerät exakt festgestellt werden kann und die daraus gewonnenen Daten bzw. Signale für eine weitere Bearbeitung, beispielsweise einer Steuereinrichtung zur Verfügung stehen, um einen vollautomatisierten Betrieb in einem Kommissionierlager zu ermöglichen.

Von Vorteil ist auch die Ausbildung nach Anspruch 25, wobei zur Zustandsüberwachung und/oder Herstellung von Wartungsprognosen in schwer zugänglichen Bereichen, wie am Fahrwerk und/oder Fahrantrieb im Mastkopfbereich, bildverarbeitende Elemente zur Datenerfassung vorgesehen sind und die Daten beispielsweise an eine Steuereinrichtung weitergeleitet werden, wo eine entsprechende Auswertung bzw. Weiterverarbeitung einfach erfolgen kann. Durch beispielsweise am Lastaufnahmemittel angeordnete bildverarbeitende Elemente kann auch eine Fachüberwachung, insbesondere ein Belegungsstatus der anzufahrenden Fächer einer Regalanlage, einfach durchgeführt werden. Natürlich können die von den bildverarbeitenden Elementen erfaßten und an die Steuereinrichtung übermittelten Daten beispielsweise auch über lokale und/oder weltweite Netzwerke, wie Intranet, Internet, zum Zwecke der Fernwartung übertragen werden.

Von Vorteil ist auch die Ausgestaltung nach Anspruch 26, wodurch selbst geringfügige Abweichungen des Lastaufnahmemittels von seiner bevorzugt horizontalen Ausrichtung, diese über die am Lastaufnahmemittel angeordnete Sensoranordnung feststellbar ist und die Einstellung des Antriebsdrehmomentes der Antriebsrolle bzw. der Vorschubgeschwindigkeit zumindest eines Fahrantriebes derart erfolgt, daß das Lastaufnahmemittel horizontal ausgerichtet ist, wodurch das Lastaufnahmemittel als Bezugsniveau für das exakte Verstellen des Hubwagens beim Ein- oder Auslagern der Last in ein Regalfach herangezogen werden kann. Das exakte Feststellen der Position des Lastaufnahmemittels vermeidet Kollisionen beim Ein- und/oder Auslagern beispielsweise einer Palette in das Regalfach.

Eine Ausgestaltung nach Anspruch 27 ermöglicht die Steuerung zumindest eines Fahrantriebes in Abhängigkeit einer aufzunehmenden Last am Lastaufnahmemittel, wonach die Anpreßkraft der Antriebsorgane an den Fahrschienen geregelt verstellt wird und dadurch ein Schlupf zwischen den Antriebsorganen und den Fahrschienen während des Antriebes im wesentlichen verhindert werden kann.

Von Vorteil ist auch die Ausgestaltung nach Anspruch 28, da durch die Teilung des Mastes in einer zur Gassenrichtung parallelen Ebene die von der Hubvorrichtung auf den Mast einwirkenden Kräfte gleichmäßiger über den Profilquerschnitt verteilt werden, da in der Hauptbeanspruchungsrichtung im unmittelbaren Nahbereich der Führungsbahnen für die Hubvorrichtung keinerlei Materialstoßstellen angeordnet sind. Dadurch kann mit geringeren Materialstärken ein Mast hergestellt werden, der gleich hohe oder höhere Belastungen sowohl statisch als auch dynamisch aufnehmen kann.

Vorteilhaft ist hierbei, daß ergänzend dazu oder nur durch die verwendete Verbindungstechnologie und das Herstellungsverfahren, nämlich ein Lötvorgang, insbesondere das MIG-Löten, die dynamischen Beanspruchungen, insbesondere die Schwingungen des Mastes, aufgrund der Beschleunigungen und Verzögerungen, gleichmäßig über die Längsrichtung aufgeteilt und Spannungsspitzen vermieden werden können. Durch die höhere Elastizität und die geringere Sprödigkeit der Lötnähte, wird die Dauerfestigkeit auch unter Schwingungsbelastungen erheblich erhöht. Des weiteren ermöglicht die halbschalenförmige Ausbildung der miteinander überlappenden oder aufeinanderliegenden, großflächigen Verbindungsbereiche eine Aufteilung der Kräfte in den Nahtbereichen auf erheblich größere Flächen und damit eine Reduktion der Spitzenbelastungen, wobei die aneinanderliegenden Längsprofile während des Lötvorganges ein gutes Eindiffundieren oder Eindringen des Lotes in den Verbindungsbereichen erlauben und der Ausgleich von Unebenheiten zwischen den aneinanderliegenden Bereichen der Längsprofile erreicht wird.

Die Weiterbildungen nach den Ansprüchen 29 bis 32 sind von Vorteil, da die die Führungsbahnen bildenden Ausbuchtungen und die im rechten Winkel zu den Ausbuchtungen ausgerichteten, die Führungsbahn bildenden Fortsätze einerseits zur Führung der Laufräder dienen und andererseits dem Mast selbst bei kleinem Querschnitt eine hohe Steifigkeit verleihen, sodaß dieser hohen statischen und dynamischen Belastungen ausgesetzt werden kann, ohne sich dabei unzulässig zu verformen. Weiters ist von Vorteil, daß durch die geringe Wärmeeintragung während des Lötprozesses die bereits im wesentlichen auf ihre Endabmessung hergestellten Längsprofile sich nicht unzulässig verziehen und somit der Lötprozeß einfach zu beherrschen ist.

Die im Bereich der U-förmigen Ausbuchtungen angeordneten Versteifungselemente, wie im Anspruch 33 beschrieben, dienen zur weiteren Anhebung der Steifigkeit bzw. Tragfähigkeit des Mastes, indem die über die Laufräder auf die Laufflächen der Ausbuchtungen abgetragenen Kräfte nicht nur auf die Profilstreifen sondern auch über die Versteifungselemente in die Anschlußbereiche zu den Ausbuchtungen abgetragen werden, so daß die seitlich vom Mast vorkragenden Führungsbahnen über ihre gesamte Betriebszeit eine hohe Laufgenauigkeit für die Hubvorrichtung bzw. das Lastaufnahmemittel ermöglichen.

Vorteilhaft ist aber auch die Ausgestaltung nach Anspruch 34 von Vorteil, wodurch ein über seinen gesamten Querschnitt kräfteübertragender Mast geschaffen wird, der in Leichtbauweise hergestellt ist.

Schließlich wird die Aufgabe der Erfindung auch durch die im Anspruch 35 wiedergegebenen Merkmale gelöst. Der Vorteil dabei ist, daß eine Mehrzahl von gleichartigen Regalbediengeräten beliebig kombinierbar ist und zu einer Regalbedienanlage zusammengesetzt werden können, die auf unterschiedliche Anforderungen, beispielsweise der Geometrie des Fördergutes, der Tragkapazität des Regalbediengerätes, Lagerumschlagzahl etc., einfach abgestimmt werden kann. Durch die beliebige Kombinierbarkeit der Regalbediengeräte ist ein hohes Maß an Flexibilität, wie es die moderne Automatisierungstechnik erfordert, ohne größeren Mehraufwand für die Montage betreiben zu müssen, gegeben.

Gemäß einer vorteilhaften Ausgestaltung nach Anspruch 36 kann über am Mastfuß und Mastkopf lösbar befestigte Trägerrahmen ein rahmenförmiges Regalbediengerät mit zwei Mästen geschaffen werden und ist dadurch eine Anpassung an unterschiedliche Einsatzgebiete möglich. Die dafür aufzuwendenden Umrüstarbeiten sind aufgrund des modularen Aufbaues der Regalbediengeräte rasch und einfach durchführbar.

Die Weiterbildung nach Anspruch 37 ermöglicht eine Erhöhung des Lagerumschlages, da von mehreren Regalbediengeräten gleichzeitig Güter gehandhabt werden können.

Die Erfindung wird im nachfolgenden anhand der in den Zeichnungen dargestellten Ausführungsbeispiele näher erläutert.

Es zeigen:
- Fig. 1: eine untere und obere Führungsbahn, insbesondere eine untere und obere Fahrschiene und das erfindungsgemäße Regalbediengerät in Seitenansicht und stark vereinfachter, schematischer Darstellung;
- Fig. 2: einen Teilbereich der oberen Fahrschiene und des Mastkopfes in stark vereinfachter, schematischer Darstellung;
- Fig. 3: eine Draufsicht auf ein Fahrwerk und einen mit diesem antriebsverbundenen Fahrantrieb mit der in strichlierten Linien dargestellten oberen Fahrschiene in stark vereinfachter, schematischer Darstellung;
- Fig. 4: eine andere Ausführungsvariante des unteren Fahrwerkes mit einem die Seitenführungsorgane tragenden Fahrschemel, quer zur Gassenrichtung geschnitten, in stark vereinfachter und schematischer Darstellung;
- Fig. 5: einen Teilbereich des Regalbediengerätes mit einer erfindungsgemäßen Hubvorrichtung in Seitenansicht und stark vereinfachter, schematischer Darstellung;
- Fig. 6: einen Teilbereich aus der Fig. 1 mit der unteren Fahrschiene, dem Mastfuß und unterem Fahrwerk und einem zwischen der Fahrschiene und dem Fahrwerk angeordneten Aushebeschutz in Seitenansicht und stark vereinfachter, schematischer Darstellung;
- Fig. 7: das Regalbediengerät und eine für Wartungszwecke zu dem Regalbediengerät auf zumindest einer Verfahrschiene verfahrbare Leiter in Seitenansicht und stark vereinfachter, schematischer Darstellung;
- Fig. 8: eine mögliche Variante einer Anordnung von mehreren Regalbediengeräten zu einer Regalbedienanlage in Seitenansicht und stark vereinfachter, schematischer Darstellung;
- Fig. 9: einen Querschnitt durch einen Mast mit an den Führungsbahnen anliegenden Seitenführungsorganen des Hubwagens;
- Fig. 10: den Mast in Ansicht und stark vereinfachter, schematischer Darstellung;
- Fig. 11: ein Versteifungselement in Ansicht und stark vereinfachter, schematischer Darstellung;
- Fig. 12: das Versteifungselement gemäß Fig. 11 in Stirnansicht und stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Es sei bereits zu Beginn darauf verwiesen, daß das erfindungsgemäße Regalbediengerät 1 nur für Geradeausfahrten geeignet ist.

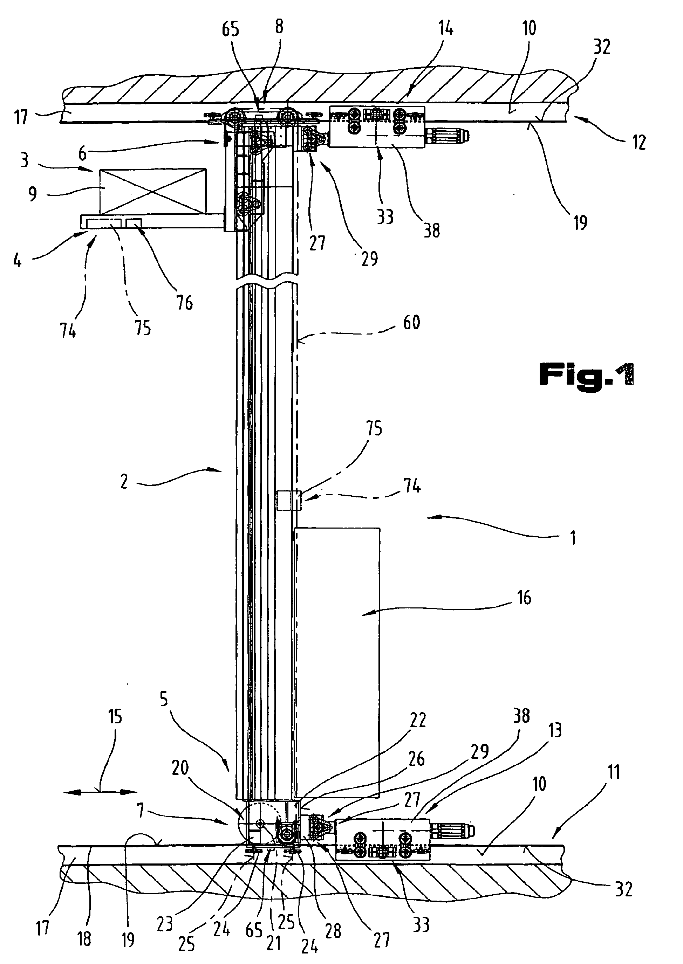

In den gemeinsam beschriebenen Fig. 1 bis 3 ist ein Regalbediengerät 1 bzw. sind Teilbereiche davon in unterschiedlichen Ansichten gezeigt. Das Regalbediengerät 1 weist einen vorzugsweise etwa lotrecht angeordneten Mast 2 mit einem in Richtung seiner Höhe verfahrbaren Hubwagen 3 mit Lastaufnahmemittel 4 und an seinem Mastfuß 5 und Mastkopf 6 angeordnete Fahrwerke 7, 8 auf. Eine das Lastaufnahmemittel 4 aufnehmende Last 9 kann über geeignete, nicht weiters dargestellte Mittel in eine und aus einer nicht weiters dargestellte Regalanlage ein- und ausgelagert werden. An dem Mastfuß 5 ist das untere Fahrwerk 7 und an dem Mastkopf 6 das obere Fahrwerk 8 angeordnet. Das untere und obere Fahrwerk 7, 8 ist jeweils auf zumindest einem im wesentlichen senkrechten Führungsbahnteil 10 einer unteren und oberen Fahrschiene 11, 12 der Seite und über zumindest einen weiteren noch genauer zu beschreibenden, im wesentlichen horizontalen Führungsbahnteil der Höhe nach geführt. Die Führungsbahnen bildenden Fahrschienen 11, 12 sind am Gebäude oder am Regal ortsfest befestigt und sind geradlinig ausgebildet. Dem Mastfuß 5 und Mastkopf 6 ist jeweils zumindest ein Fahrantrieb 13, 14 zur Beaufschlagung des Mastes 2 mit einer Vorschubbewegung in Gassenrichtung - gemäß Doppelpfeil 15 - zugeordnet. Die in Gassenrichtung - gemäß Doppelpfeil 15 - hintereinander angeordneten, auf der unteren und oberen Führungsbahn, insbesondere unteren und oberen Fahrschiene 11, 12, verfahrbaren und jeweils für sich der Höhe und Seite nach geführten Fahrwerke 7, 8 und Fahrantriebe 13, 14 stehen zueinander in Antriebsverbindung. Vorzugsweise sind der untere und obere Fahrantrieb 13, 14 an einer Rückseite des Mastes 2 übereinander an der unteren und oberen Fahrschiene 11, 12 angeordnet. Selbstverständlich ist es auch möglich, beidseits des Mastes 2 jeweils einen Fahrantrieb 13, 14 anzuordnen. Die Fahrantriebe 13, 14 bilden eine untere und obere Verstellvorrichtung aus. Ebenfalls an der Rückseite des Mastes 2 ist ein Schaltschrank 16 angeordnet, der u. a. die Steuerung, Regelung und Leistungselektronik beispielsweise für einen Hubmotor des Hubwagens 3, die Fahrantriebe 13, 14 und dgl. enthält. Die Fahrbahnen bzw. die diese bildenden Fahrschienen 11, 12 sind bevorzugt flanschförmig nach Art einer I-Schiene ausgebildet. An der unteren Fahrschiene 11 sind an einem senkrechten Steg 17 nicht weiters dargestellte Schleifleitungen angeordnet, die das Regalbediengerät 1 mit Energie versorgen und über die gegebenenfalls ein Datenaustausch vom ortsfesten Lagerverwaltungsrechner zum Regalbediengerät 1 und zurück erfolgen kann. Selbstverständlich kann die Schleifleitung auch parallel in einem Abstand zur Fahrschiene 11 verlaufen.

Das untere Fahrwerk 7 weist zumindest ein sich an einem von einem Obergurt 18 der Fahrschiene 11 ausgebildeten horizontalen Führungsbahnteil 19 abwälzendes Höhenführungsorgan 20 auf. Das untere Fahrwerk 7 kann natürlich auch in Gassenrichtung - gemäß Doppelpfeil 15 - mehrere hintereinander angeordnete, lastabtragende Höhenführungsorgane 20, insbesondere Höhenführungsrollen, aufweisen. Im vorliegenden Ausführungsbeispiel wird das Höhenführungsorgan 20 durch eine beispielsweise aus Stahl gefertigte Führungsrolle mit gegebenenfalls einem die Lauffläche umgebenden Kunststoffmantel gebildet. Eine Rotationsachse 21 der Höhenführungsrolle verläuft quer zur Gassenrichtung - gemäß Doppelpfeil 15 - bzw. Längserstreckung der Fahrschiene 11. Eine das Fahrwerk 7 bildende gehäuseartige Umrahmung 22 nimmt die Rotationsachse 21 auf und lagert die Höhenführungsrolle über einen in der Umrahmung 22 angeordneten Bolzen. Die Umrahmung 22 weist einen U-förmigen Querschnitt auf und trägt an seinen zumindest um die Breite des Obergurtes 18 voneinander distanzierten Seitenwänden 23 jeweils zumindest ein an den vertikalen Führungsbahnteilen 10 des Steges 17 der unteren Fahrschiene 11 anliegende Seitenführungsorgane 24. Die Seitenführungsorgane 24 sind zweckmäßig gelenkig mit dem Fahrwerk 7 verbunden, so daß auch bei einer Schiefstellung des Mastes 2 Rotationsachsen 25 der Seitenführungsorgane 24 senkrecht zur Gassenrichtung - gemäß Doppelpfeil 15 - und parallel zu den Führungsbahnteilen 10 ausgerichtet sind. Eine das untere Fahrwerk 7 umfassende Führungsvorrichtung weist das Höhenführungsorgan 20 und die Seitenführungsorgane 24 auf.

Die Fig. 1 zeigt das untere Fahrwerk 7 mit vier Seitenführungsorganen 24, wobei die Seitenführungsorgane 24 paarweise nebeneinanderliegend an den Seitenwänden 23 und in Gassenrichtung - gemäß Doppelpfeil 15 - hintereinander angeordnet sind. Natürlich besteht auch die Möglichkeit, daß das Fahrwerk 7 mit nur zwei Seitenführungsorganen 24 ausgestattet ist, die in Gassenrichtung - gemäß Doppelpfeil 15 - hintereinander und diagonal versetzt zueinander angeordnet sind. Die Seitenführungsorgane 24 werden im einfachsten Fall ebenfalls durch Seitenführungsrollen mit senkrecht zur Längserstreckung der Fahrschiene 11 und im wesentlichen parallel zu den Führungsbahnteilen 10 ausgerichteten Rotationsachsen 25 gebildet. An einer Rückenwand 26 des Fahrwerkes 7 oder an der Rückenwand des Mastfußes 5 und an dem Fahrantrieb 13 ist jeweils zumindest ein erster Anlenkpunkt für die Übertragung bzw. Beaufschlagung des Fahrwerkes 7 mit einer Vorschubkraft bzw. Vorschubbewegung des Fahrantriebes 13 vorgesehen. Zwischen diesen Anlenkpunkten erstreckt sich zumindest eine noch näher zu beschreibender Kupplungsverbindung 27.

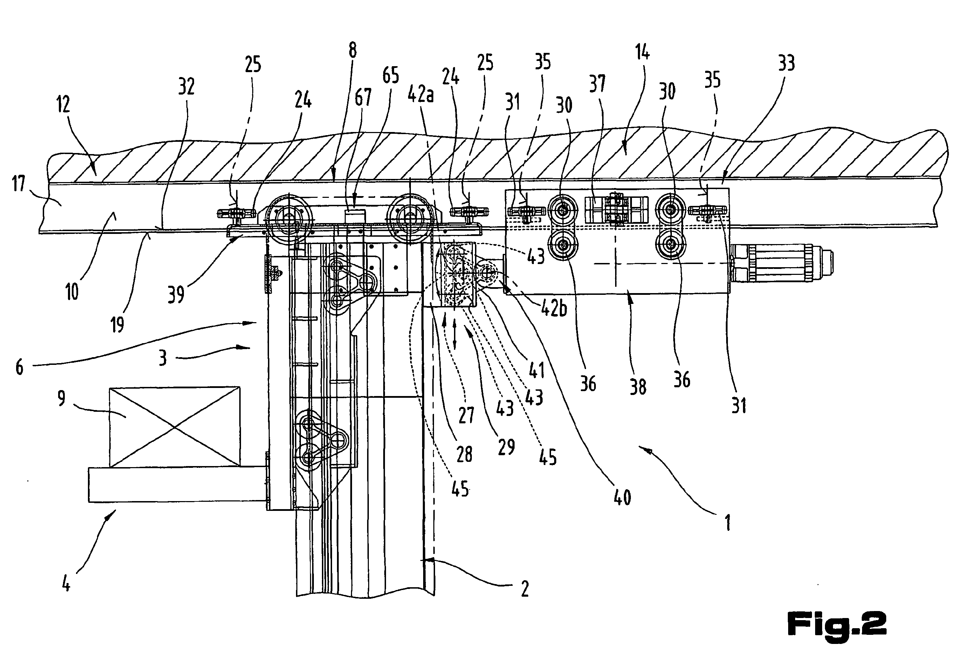

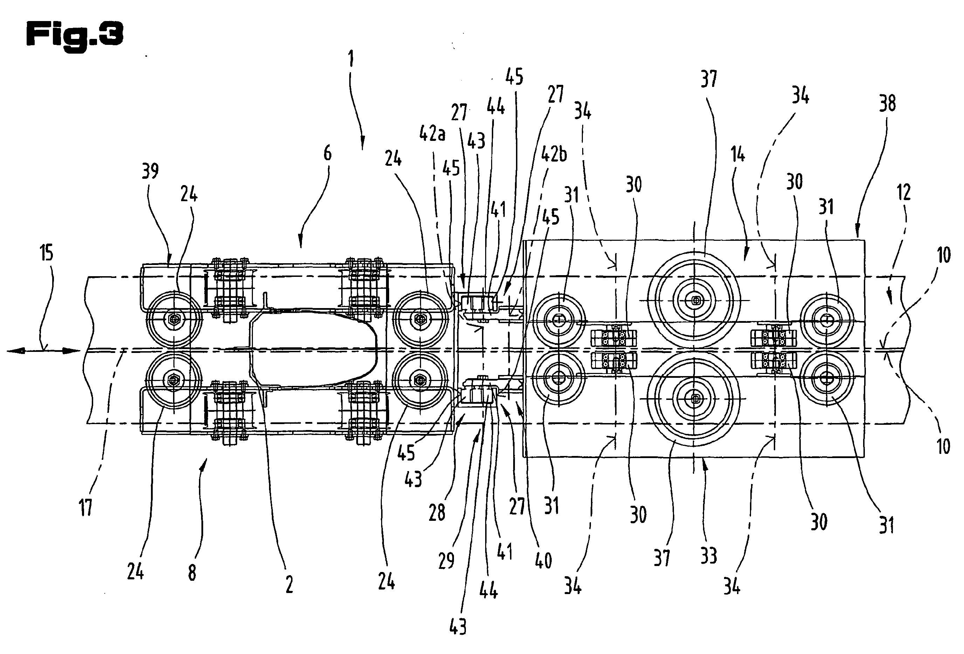

Gemäß dieser Ausführung ist der erste Anlenkpunkt des Fahrantriebes 13 am Fahrwerk 7 quer zum horizontalen Führungsbahnteil 19 in Richtung des Mastfußes 5 versetzt angeordnet. Eine zusätzliche Verringerung der mechanischen Belastung auf die Führungsbahnteile 19 kann dadurch erreicht werden, indem der Anlenkpunkt des Fahrantriebes 13 am Fahrwerk 7 quer zum horizontalen Führungsbahnteil 19 in zum Mastfuß 5 entgegengesetzter Richtung versetzt angeordnet. Der zumindest eine erste Anlenkpunkt ist von zumindest einem am Mast 2 oder Fahrwerk 7 starr angeordneten Kupplungsteil 28 ausgebildet. Zumindest eine Kupplungsvorrichtung 29 zwischen dem Fahrwerk 7 und dem Fahrantrieb 13 stellt zwischen dem mastseitigen Anlenkpunkt und dem weiteren, zu diesem zumindest geringfügig distanzierten weiteren fahrantriebsseitigen Anlenkpunkt die Antriebsverbindung her, wobei in zumindest einem der Anlenkpunkte des Fahrwerkes 7 und/oder Fahrantriebes 13 eine Verschwenkbewegung der Kupplungsvorrichtung 29 aufgenommen werden kann. Der mastseitige Anlenkpunkt und fahrantriebsseitige Anlenkpunkt sind bevorzugt an der gleichen Seite, in der das Versetzen des mastseitigen Anlenkpunktes erfolgt, oberhalb oder unterhalb der Führungsbahnteile 19 angeordnet. Selbstverständlich ist es auch möglich, daß der mastseitige Anlenkpunkt oberhalb und der fahrantriebsseitige Anlenkpunkt unterhalb oder der mastseitige Anlenkpunkt unterhalb und der fahrantriebsseitige Anlenkpunkt oberhalb der Führungsbahnteile 19 angeordnet sind. Ein genauerer konstruktiver Aufbau der Anlenkpunkte und der Kupplungsvorrichtung 29 wird anhand der Fig. 2 und 3 näher erläutert.

Wie in der Zusammenschau aus der Fig. 1 und Fig. 3 entnehmbar ist, bilden die Fahrantriebe 13, 14 jeweils eine mit den Fahrwerken 7, 8 antriebsverbundene eigenständige Baueinheit aus, wobei die Fahrantriebe 13, 14 mit ihrem zumindest einen Höhenführungsorgan 30 und zumindest einen Seitenführungsorgan 31 auf Führungsbahnteilen 19, 32 der Höhe und Seite nach geführt und über zumindest eine Antriebsvorrichtung 33 entlang der unteren und oberen Fahrschienen 11, 12 geradlinig verfahrbar sind.

Die Höhenführungsorgane 30 werden durch um quer zur Gassenrichtung - gemäß Doppelpfeil 15 - bzw. Längserstreckung der Fahrschienen 11, 12 und parallel zu den Führungsbahnen 19; 32 verlaufende Achsen 34 rotierende Höhenführungsrollen und die Seitenführungsorgane 31 durch um senkrecht zur Gassenrichtung - gemäß Doppelpfeil 15 - bzw. Längserstreckung der Fahrschienen 11, 12 und parallel zum Führungsbahnteil 10 verlaufende Rotationsachsen 35 rotierende Seitenführungsrollen gebildet.

Jeder der Fahrantriebe 13, 14 weist zumindest zwei in Gassenrichtung - gemäß Doppelpfeil 15 - voneinander distanziert angeordnete Paare von beidseits des Steges 17 der bevorzugt I-förmig ausgebildeten Fahrschienen 11, 12 an voneinander abgekehrten Führungsbahnteilen 19, 32 der unteren und oberen Fahrschienen 11, 12 anliegende Höhenführungsorgane 30 und zumindest ein an voneinander abgekehrten Führungsbahnen 32, 19 der unteren und oberen Fahrschiene 11, 12 anliegende Andrückorgane 36 und bevorzugt zumindest zwei in Gassenrichtung voneinander distanziert angeordnete Paare von an gegenüberliegenden Führungsbahnen 10 anliegenden Seitenführungsorganen 31, auf. Gegebenenfalls können die Höhenführungsorgane 30 und Andrückorgane 36 über ein endlos umlaufendes Zugmittel miteinander verbunden werden.

Natürlich besteht auch die Möglichkeit, daß zur Höhenführung der Fahrantriebe 13, 14 zwei in Gassenrichtung - gemäß Doppelpfeil 15 - hintereinander und diagonal versetzt zueinander angeordnete Höhenführungsorgane 30 und zur Seitenführung zwei in Gassenrichtung - gemäß Doppelpfeil 15 - hintereinander und diagonal versetzt zueinander angeordnete Seitenführungsorgane 31 vorgesehen sind.

Die Andrückorgane 36 werden durch um quer zur Gassenrichtung - gemäß Doppelpfeil 15 - bzw. Längserstreckung der Fahrschienen 11, 12 verlaufende Achsen rotierende und in radialer Richtung elastisch verformbare Druckrollen gebildet, die in Richtung des Führungsbahnteiles 19; 32 eine gerichtete Anpreßkraft ausüben.

Die Antriebsvorrichtung 33 der Verstellvorrichtungen bzw. die diese bildenden Fahrantriebe 13, 14 weisen jeweils zumindest eine über einen Antriebsmotor antreibbare Antriebsrolle 37 auf, die an den Führungsbahnteil 10 des Steges 17 angreift. Natürlich können auch mehrere, an den gegenüberliegenden Führungsbahnteilen 10 des Steges 17 angreifende, angetriebene Antriebsrollen 37, wie in Fig.3 dargestellt ist, oder zumindest ein unangetriebenes Gegenrad vorgesehen werden, die mit einer vordefinierbaren Andruckkraft an die Führungsbahnteile 10 gepreßt werden. Die Rotationsachse der Antriebsrolle 37 verläuft parallel zu den Rotationsachsen 35 der Seitenführungsrollen und senkrecht zur Längserstreckung der Fahrschienen 11, 12. Das Antriebsmoment der Antriebsrolle 37 wird daher auf kraftschlüssigem Wege übertragen und wird infolgedessen eine Vorschubbewegung der Fahrantriebe 13, 14 ausgelöst und auf die Fahrwerke 7, 8 übergeleitet. Der Antriebsmotor der Fahrantriebe 13, 14 kann durch einen Servomotor, Schrittschaltmotor, der bevorzugt unmittelbar an die Antriebsrolle 37 angekoppelt ist, oder einen Asynchronmotor oder Synchronmotor mit Getriebeanordnung zwischen diesem und der Antriebsrolle 37 gebildet werden.

Die Höhen- und/oder Seitenführungsrollen der Fahrantriebe 13, 14 können manuell oder selbsttätig oder automatisch nachgestellt werden, um ein sicheres Anliegen bzw. Abwälzen bzw. eine sichere Antriebsdrehmomentübertragung derselben an bzw. auf die Führungsbahnen 10, 19, 32 zu bewirken. Ein die Fahrschiene 11, 12 weitestgehend umgreifendes Gehäuse 38 stützt den Antriebsmotor ab und weist dieses geeignete Mittel zur verdrehbeweglichen Lagerung der Höhen- und Seitenführungs- und Andrückorgane 30, 31, 36 auf.

Wie nicht weiters dargestellt, können die Höhen- und/oder Seitenführungsorgane 30, 31 der Fahrantriebe 13, 14 jeweils auf einen gemeinsamen Tragrahmen angeordnet werden, wobei die Höhen- und/oder Seitenführungsorgane 30, 31 unter der Wirkung zumindest einer auf den Tragrahmen wirkenden Anpreßkraft gegen die Führungsbahnteile 10, 19, 32 gepreßt werden.

Das über die Kupplungsvorrichtung 29 mit dem oberen Fahrantrieb 14 antriebsverbundene obere Fahrwerk 8 weist zwei in Gassenrichtung - gemäß Doppelpfeil 15 - voneinander distanziert angeordnete Paare von an gegenüberliegenden Führungsbahnteilen 10 der oberen Führungsbahn bzw. Fahrschiene 12 anliegende Seitenführungsorgane 24 auf, die bevorzugt durch sich an den Führungsbahnteilen 10 abwälzende Seitenführungsrollen gebildet sind und die um die senkrecht zur Längserstreckung der Fahrschiene 12 ausgerichtete Rotationsachsen 25 rotieren. Das am Mastkopf 6 befestigte obere Fahrwerk 8 ist im wesentlichen durch einen die in Gassenrichtung - gemäß Doppelpfeil 15 - hintereinander angeordneten Paare von Seitenführungsorganen 31 aufnehmenden Trägerrahmen 39 gebildet. Der Trägerrahmen 39 ist derart ausgebildet, daß konstruktive Mittel zur Lagerung der Seitenführungsrollen vorgesehen sind. Weiters weist dieser, wie in der Fig. 3 ersichtlich, 2 Paare von Abtriebselementen für eine noch näher zu beschreibende Hubvorrichtung auf. Natürlich besteht auch beim oberen Fahrwerk 8 die Möglichkeit, daß dieses in Gassenrichtung - gemäß Doppelpfeil 15 - nur zwei hintereinander und diagonal zueinander versetzt angeordnete Seitenführungsorgane 24, insbesondere Seitenführungsrollen, aufweist. Eine das obere Fahrwerk 8 umfassende Führungsvorrichtung weist die Seitenführungsorgane 24 auf.

Es sei an dieser Stelle darauf hingewiesen, daß natürlich auch die Möglichkeit besteht, daß die Höhen- und Seitenführungsorgane 20, 24; 30, 31 der Fahrwerke 7, 8 und/oder Fahrantriebe 13, 14 durch an den Führungsbahnteilen 19, 32, 10 mit einer vorbestimmbaren Anpreßkraft andrückbare Führungsleisten, wie diese jedoch nicht weiters dargestellt wurden, gebildet sind.

Durch das Zusammenwirken des am Mastfuß 5 angeordneten unteren Fahrwerks 7 und des am Mastkopf 6 angeordneten oberen Fahrwerkes 8, bildet der Mast 2, der über im Bereich des Mastfußes 5 und Mastkopfes 6 vorgesehene Anlenkpunkte zur Beaufschlagung derselben mit einer Vorschubbewegung durch die Fahrantriebe 13, 14 entlang der unteren und oberen Fahrschiene 11, 12 verfahrbar ist, ein der Höhe und Seite nach geführtes System aus.

Der zumindest weitere mastseitige Anlenkpunkt am oberen Fahrwerk 8 ist quer zu dem horizontalen Führungsbahnteil 19, zweckmäßig in Richtung des Mastes 2 oder gegebenenfalls in entgegengesetzter Richtung versetzt angeordnet. Der mastseitige Anlenkpunkt und der fahrantriebsseitige Anlenkpunkt sind bevorzugt an der gleichen Seite, in der das Versetzen des mastseitigen Anlenkpunktes erfolgt, gegebenenfalls oberhalb oder zweckmäßig unterhalb des Führungsbahnteiles 19 angeordnet. Dadurch kann zumindest während des Verfahrens des Mastes 2 entlang der Führungsbahnen bzw. Führungsschienen 11, 12 eine Entlastung vor allem auf das untere Höhenführungsorgan 20 und der unteren Führungsbahn bzw. unteren Fahrschiene 11 erreicht werden.

Wie bereits zuvor kurz beschrieben und nunmehr aus dieser Fig. 2 besser ersichtlich, ist die Kupplungsvorrichtung 29 mit zumindest einem weiteren, am Mastkopf 6 angeordneten weiteren Anlenkpunkt wirkungsverbunden. Die Kupplungsvorrichtung 29 weist neben dem am Mast 2 angeordneten Kupplungsteil 28 noch zumindest einen weiteren am Fahrantrieb 13, 14 angeordneten Kupplungsteil 40 auf, zwischen denen sich die Kupplungsverbindung 27 erstreckt und die mit diesen verbunden ist.

Die beispielsweise in etwa gabelartig ausgebildete Kupplungsvorrichtung 29 weist zwei in quer zur Längserstreckung bzw. Gassenrichtung - gemäß Doppelpfeil 15 - in einem Abstand zueinander angeordnete und um fahrantriebsseitige Kupplungsteile 40 verschwenkbeweglich gelagerte Wangenteile 41 auf, die bevorzugt in etwa dreieckförmig ausgebildet sind. Die Wangenteile 41 sind an ihren dem Mast 2 zugewandten Eckbereichen mit zumindest zwei Führungsorganen 43 und in etwa im Bereich eines Schwerpunktes der Wangenteile 41 mit einem weiteren Führungsorgan 43 versehen.

Die Kupplungsvorrichtung 29 weist zumindest zwei Gelenkachsen 42a, 42b auf, wovon eine dem Fahrwerk 7, 8 zugewandte Gelenkachse 42a mit dem mastseitigen Kupplungsteil 28 und die zu dieser distanzierte weitere dem Fahrantrieb 13, 14 zugewandte Gelenkachse 42b mit dem fahrantriebsseitigen Kupplungsteil 40 zusammenfällt. Der Kupplungsteil 40 und ein diesem zugewandtes Ende der Kupplungsverbindung 27 sind jeweils mit einer von einem Kupplungsbolzen durchragten Bohrung versehen, wobei eine Längsmittelachse des Kupplungsbolzens und die Gelenkachse 42b des Kupplungsteiles 40 deckungsgleich verlaufen. Um gegebenenfalls eine Verdrehung des Fahrantriebes 13, 14 gegenüber dem Fahrwerk 7, 8 aufnehmen zu können, wird die Kupplungsverbindung 27 über ein im Bereich der Gelenkachse 42a; 42b angeordnetes Gummiausgleichselement in Längsrichtung des Kupplungsbolzens elastisch gelagert.

Der den ersten mastseitigen Anlenkpunkt aufweisende Kupplungsteil 28 weist zumindest eine, bevorzugt zwei voneinander distanzierte profilartige, mit den Führungsorganen 43 korrespondierende und in etwa parallel zur Längserstreckung des Mastes 2 verlaufende Längsführungen 44 auf, an deren von diesen ausgebildeten senkrechten Führungsbahnen 45 sich die Führungsorgane 43 abstützen. Über mechanische Mittel, beispielsweise Verstellexzenter, ist eine spielfreie Einstellung der Führungsorgane 43 gegenüber den Führungsbahnen 45 durchführbar und ist der Mast 2 mit dem unteren und oberen Fahrantrieb 13, 14 zur Übertragung der Vorschubbewegung zumindest in Gassenrichtung - gemäß Doppelpfeil 15 - spielfrei verbunden. Die Kupplungsvorrichtung 29 ermöglicht bei einer gegebenenfalls eintretenden Abweichung der lotrechten Ausrichtung des Mastes 2 eine Verschwenkbewegung um die Gelenkachse 42b und eine vertikal geführte Lageänderung des Mastes 2, indem die sich entlang der Führungsbahnen 45 abwälzenden Führungsorgane 43 vertikal verstellt werden. Der Mast 2 weist daher zwei in Richtung seiner Längserstreckung und Gassenrichtung - gemäß Doppelpfeil 15 - verlaufende Freiheitsgrade auf. Dadurch ist der Mast 2 auch bei einer gegebenenfalls eintretenden Schiefstellung zwängungsfrei am Mastfuß 5 und Mastkopf 6 gegenüber den Fahrantrieben 13, 14 positioniert gehalten. Durch Vorsehen eines quer zur Längserstreckung der Fahrschienen 11, 12 ausgebildeten Spieles zwischen den Führungsorganen 43 und den Längsführungen 44 ist ein Ausgleich von vorhandenen Abweichungen der Linearität der Fahrschienen 11, 12 ermöglicht und kann ein gegenseitiges Verspannen der der Höhe und Seite nach geführten Fahrwerke 7, 8 und Fahrantriebe 13, 14 vermieden werden.

Eine andere, jedoch nicht weiters dargestellte Ausführung des Ausgleiches von Abweichungen von der Linearität der Fahrschienen 11, 12 besteht darin, daß die Fahrwerke 7, 8 und Fahrantriebe 13, 14 über die Kupplungsvorrichtung 29 quer zur Längserstreckung der Fahrschienen 11, 12 spielfrei zueinander geführt sind und die Höhen- und Seitenführungsorgane 30, 31 und Antriebsrollen 37 und Andrückorgane 36 der Fahrantriebe 13, 14 auf einem entlang einer Führungsvorrichtung quer zur Gassenrichtung - gemäß Doppelpfeil 15 - verstellbaren Führungsschlitten angeordnet sind. Dazu ist der Führungsschlitten zu dem Gehäuse 38 des Fahrantriebes 13, 14 relativ verstellbar ausgebildet.

Eine weitere, nicht dargestellte Ausführung der Kupplungsverbindung 27 besteht darin, daß diese durch einen elektrisch ansteuerbaren Stellantrieb, insbesondere Gewindespindelantrieb, der an den Gelenkachsen 42a, 42b beweglich befestigt ist, gebildet ist.

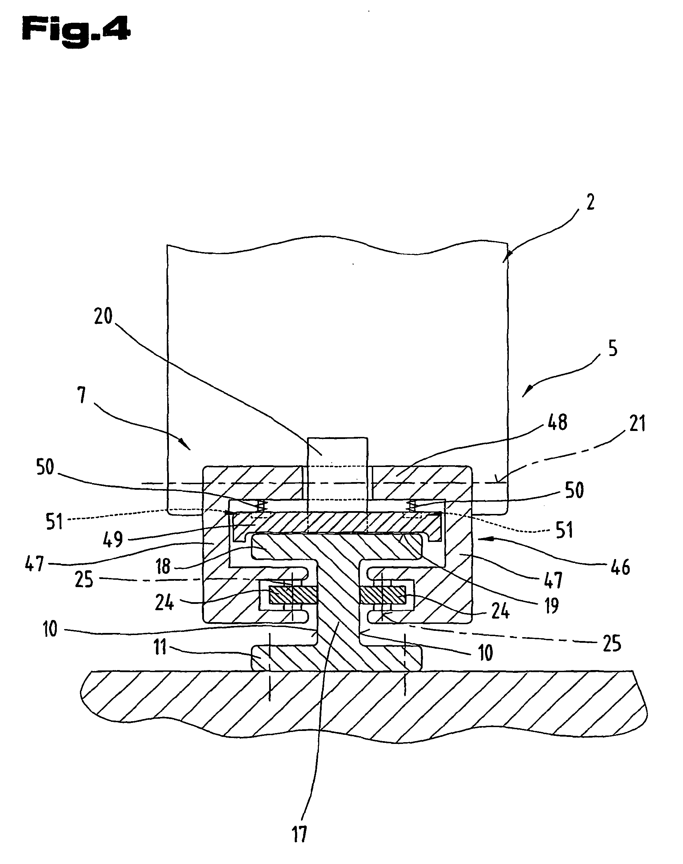

In der Fig. 4 ist ein Teilbereich des Mastes 2 mit dem das untere Fahrwerk 7 tragenden Mastfuß 5 und einem dem Fahrwerk 7 zugeordneten Fahrschemel 46 und die untere Führungsbahn bzw. die diese bildende Fahrschiene 11 teilweise geschnitten dargestellt. Das Fahrwerk 7 weist zumindest ein Höhenführungsorgan 20, insbesondere die um die quer zur Längserstreckung der Fahrschiene 11 verlaufende Rotationsachse 21 drehbare und an dem horizontalen Führungsbahnteil 19 der Fahrschiene 11 sich abwälzende Höhenführungsrolle und den um die Rotationsachse 21 des Höhenführungsorganes 20 verschwenkbeweglich gelagerten Fahrschemel 46 auf. Der Fahrschemel 46 umgreift weitestgehend die Fahrschiene 11 und ist im Querschnitt in etwa U-förmig ausgebildet und ist an seinen in etwa parallel zu dem Steg 17 verlaufenden und zu diesem distanziert angeordneten Schenkeln 47 mit um parallel zu den Führungsbahnteilen 10 des Steges 17 verlaufende Rotationsachsen 25 drehbaren Seitenführungsorganen 24 ausgestattet. An einer dem Obergurt 18 der Fahrschiene 11 zugewandten Basis 48 des Fahrschemels 46 ist zumindest eine die Führungsbahnteile 19 überstreifende Abstreifleiste 49 vorgesehen. Die in etwa plattenförmig und an die Umrißform des Obergurtes 18 angepaßte Abstreifleiste 49 ist um seine parallel zur Rotationsachse 21 der Höhenführungsrolle verlaufende Quermittelachse entgegen der Wirkung von beidseits der Quermittelachse angeordneten elastischen Rückstellelementen verstellbar ausgebildet. Dadurch ist die Abstreifleiste 49 in Art einer Wippe ausgebildet, die in jeder Betriebsstellung des Mastes 2 im wesentlichen vollflächig an den Führungsbahnteil 19 der Fahrschiene 11 aufliegt. Die elastischen Rückstellelemente 50, die beispielsweise eine Federanordnungen gebildet sind, sind über stiftartige Führungselemente 51 zwischen der Abstreifleiste 49 und der Basis 48 des Fahrschemels 46 positioniert gehalten. Ein weiterer Vorteil der Anordnung der Abstreifleiste 49 ist vor allem auch darin zu sehen, daß bei einer Schiefstellung des Mastes 2 durch die um die Quermittelachse voneinander distanziert angeordneten elastischen Rückstellelemente 50 ein Kräftegleichgewicht der in Längsrichtung voneinander distanzierten Rückstellelementen 50 eingestellt wird und durch die entstehenden Reaktionskräfte der Rückstellelemente 50 der Fahrschemel in eine vorbestimmbare, insbesondere horizontale Lage verbracht wird und dadurch die Seitenführungsorgane 24 derart ausgerichtet werden, daß die Rotationsachsen 25 senkrecht auf die Längserstreckung der Fahrschiene 11 ausgerichtet sind. In der vorliegenden Ausführung sind der Abstreifleiste 49 zwei Paare von Rückstellelementen 50 zugeordnet. Durch diese selbsttätige Ausrichtung des die Seitenführungsorgane 24 tragenden Fahrschemels 46 kann selbst bei einer Schiefstellung des Mastes 2 der erhöhte reibungsbedingte Verschleiß, welcher infolge einer Schiefstellung bzw. Anstellung der Seitenführungsorgane 24 auftreten würde, vermieden werden. Die Abstreifleiste 49 ist bevorzugt aus verschleißfestem Kunststoff, wie Polytetrafluorethylen, Polyamid, gebildet.

Natürlich besteht auch die Möglichkeit, daß die Rückstellelemente 50 durch mechanisch und/oder elektrisch und/oder hydraulisch und/oder pneumatisch betätigbare Mittel gebildet sind.

Der Einfachheit halber wurden der konstruktive Aufbau und die Funktionsweise des Fahrschemels 46 nur im Bereich des Mastfußes 5 erläutert. Natürlich kann gleichermaßen auch der Mastkopf 6 bzw. das obere Fahrwerk 8 mit dem derartigen Fahrschemel 46 ausgestattet werden. Dies ist jedoch nicht weiters dargestellt.

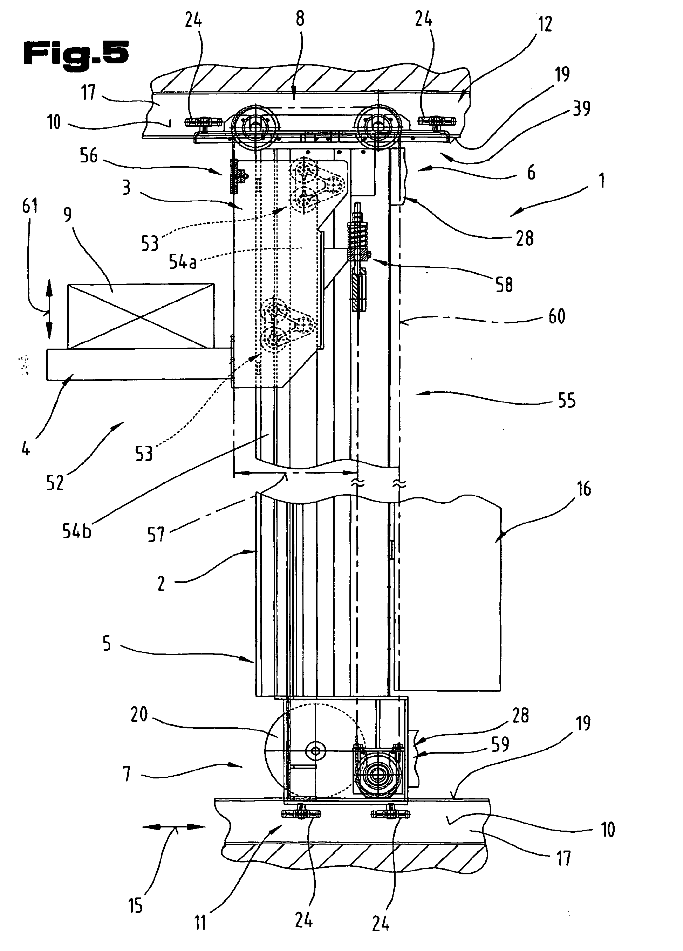

In der Fig. 5 ist eine Hubvorrichtung 52 des Regalbediengerätes 1 in Seitenansicht dargestellt. Der Einfachheit halber wurden nur noch die am Mastfuß 5 und Mastkopf 6 angeordneten Fahrwerke 7, 8 dargestellt, die auf Führungsbahnteilen 10, 19 der unteren und oberen Fahrbahnen bzw. die diese bildenden Fahrschienen 11, 12 geführt sind. Der Aufbau und die Funktionsweise der Fahrwerke 7, 8 kann aus den zuvor beschriebenen Fig. 1 bis 4 übertragen werden. Der in Richtung der Höhe des Mastes 2 verfahrbare schlittenartige Hubwagen 3 mit Lastaufnahmemittel 4 ist mit zumindest einer, bevorzugt zwei Höhen- und/oder Seitenführungsorgane 53 aufweisende Führungsvorrichtungen auf zumindest einer Führungsbahn 54 am Mast 2 geführt und ist dieser über eine Antriebsvorrichtung 55 entlang der Führungsbahn 54 im wesentlichen vertikal verstellbar. Der Hubwagen 3 ist weiters mit dem über die Führungsbahn 54 vorkragenden Lastaufnahmemittel 4 versehen. Zumindest ein Anlenkpunkt 56 der Antriebsvorrichtung 55 am Hubwagen 3 ist quer zur vertikalen Führungsbahn 54 beispielsweise in Richtung des Lastaufnahmemittels 4 versetzt angeordnet. Wie der Fig. weiters entnehmbar, ist am Hubwagen 3 zumindest ein weiterer quer zur Führungsbahn 54 in Richtung des Mastes 2 und in einem Abstand 57 zum zumindest ersten Anlenkpunkt 56 versetzt angeordneter Anlenkpunkt 58 vorgesehen.

Die Antriebsvorrichtung 55 weist zumindest ein über einen Hubmotor 59 antreibbares Antriebsorgan 60 auf, das mit dem über das bandartige Antriebsorgan 60 verstellbaren Hubwagen 3 in dem ersten und weiteren Anlenkpunkt 56, 58 verbunden ist. Das bandartige Antriebsorgan 60 wird durch ein endliches Zugmittel, insbesondere einen Zahnriemen, gebildet. Der mit einem Antriebselement versehene Hubmotor 59 ist am Mast 2, bevorzugt im Bereich des Mastfußes 5 oder am unteren Fahrwerk 7 angeordnet. Diesem liegt im Bereich des Mastkopfes 6 zumindest ein Abtriebselement für das an diesem umzulenkende Antriebsorgan 60 gegenüber. Der horizontal bemessene Abstand 57 kann durch die Wahl unterschiedlicher Durchmesser des Antriebselementes und Abtriebselementes variabel bestimmt werden. Bevorzugt weist der Mastkopf 6 oder der Trägerrahmen 39 zwei in Gassenrichtung - gemäß Doppelpfeil 15 - voneinander distanziert angeordnete Abtriebselemente, insbesondere Umlenkrollen, um die das Antriebsorgan 60 während einer Verstellbewegung des Hubwagens 3 umgelenkt wird, auf. Endbereiche des Antriebsorganes 60 sind über Befestigungsvorrichtungen in den Anlenkpunkten 56, 58 unmittelbar mit dem Hubwagen 3 bewegungsfest verbunden.

Werden mehrere parallel zueinander verlaufende Antriebsorgane 60 eingesetzt, werden ihre Endbereiche über einen nicht weiters dargestellten Befestigungsschenkel an dem Hubwagen 3 gelenkig verbunden. Dabei ist in den Anlenkpunkten 56, 58 jeweils ein um eine quer zur Verstellrichtung - gemäß Doppelpfeil 61 - verlaufende Achse von einem Gelenk verschwenkbeweglich gelagerter Befestigungsschenkel angeordnet, wobei zumindest zwei endlich ausgebildete Antriebsorgane 60 über ihre Endbereiche beidseits des Gelenks mit beiden Befestigungsschenkel verbunden werden.

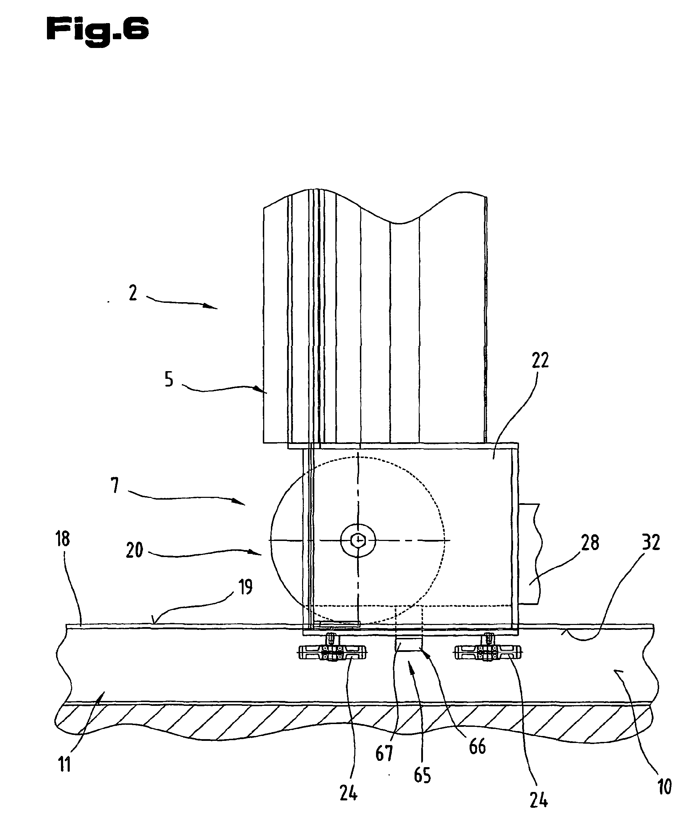

In der Fig. 6 ist ein Teilbereich des Mastes 2 mit dem am Mastfuß 5 angeordneten unteren Fahrwerk 7, welches über Höhen- und Seitenführungsorgane 20, 24 auf der unteren Führungsbahn bzw. die von dieser gebildeten Fahrschiene 11 gestützt und geführt ist, gezeigt. Die gehäuseartige Umrahmung 22 des Fahrwerkes 7 weist an einer der Fahrschiene 11 zugewandten Seite zumindest einen zwischen der Fahrschiene 11, insbesondere einem Untergurt und dem Fahrwerk 7 angeordneten Aushebeschutz 65 auf, um ein Wegkippen des Mastes 2 durch unzulässige Schiefstellung zu verhindern. Der die Fahrschiene 11 zumindest bereichsweise umgreifende bügelartige Aushebeschutz 65 ist mit seiner Basis mit dem Fahrwerk 7 bewegungsfest verbunden und freie Bügelendbereiche 66 sind mit Stützelemente 67, wie Kufen, Räder ausgestattet. Die Stützelemente 67 sind bei senkrechter Ausrichtung des Mastes 2 distanziert zu den Führungsbahnteilen 32 angeordnet, während bei einer im wesentlichen unzulässigen Schiefstellung des Mastes 2 die Stützelemente 67 an den Führungsbahnteilen 32 zur Anlage kommen und den Mast 2 in einer gesicherten Position halten.

Wie in der Fig. 2 eingetragen, ist auch das obere Fahrwerk 8 mit zumindest einem Aushebeschutz 65 ausgestattet, der zwischen der oberen Führungsbahn bzw. der von dieser gebildeten oberen Fahrschiene 12, insbesondere einem Obergurt, und dem oberen Fahrwerk 8 angeordnet ist. Der obere Aushebeschutz 65 soll einen Absturz des Mastes 2 bei unzulässiger Schiefstellung verhindern und diesen in seiner Schiefstellung gesichert halten. Der Aushebeschutz 65 weist, wie bereits zuvor beschrieben, in den Bügelendbereichen 66 die Stützelemente 67 auf.

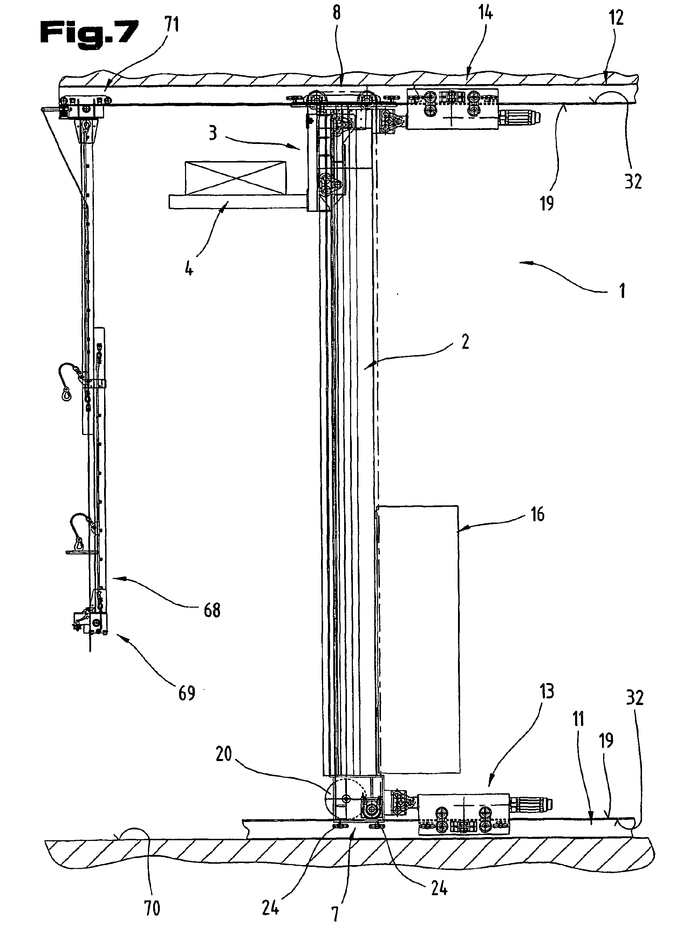

In der Fig. 7 ist das entlang der unteren und oberen Führungsbahn bzw. Fahrschiene 11, 12 der Höhe und Seite nach geführt verfahrbare Regalbediengerät 1 in Seitenansicht gezeigt, deren einzelne Baueinheiten, wie Fahrwerke 7, 8, Verstellvorrichtungen bzw. Fahrantriebe 13, 14 usw. aus den zuvor beschriebenen Figuren übernommen werden können. Wie aus dieser Fig. ersichtlich, kann für Wartungszwecke, Instandhaltungszwecke etc. zumindest eine entlang zumindest einer, bevorzugt der oberen Fahrschiene 12 der Höhe und Seite nach geführt verfahrbaren Leiter 68 zu dem Regalbediengerät 1 zugestellt werden. Die Leiter 68 ist bevorzugt längenvariabel ausgebildet und über einen ausziehbaren oder verschwenkbaren Stützapparat 69 an einer Aufstandsfläche 70 eines Hallenbodens gesichert abstützbar. Zur Höhen- und Seitenführung der Leiter 68 weist dieses zumindest an seinem oberen Ende ein Leiterfahrwerk 71 mit Höhen- und Seitenführungsorganen auf. Natürlich besteht auch die Möglichkeit, wie dies jedoch nicht dargestellt ist, daß sich die Leiter 68 über die gesamte Höhe des Mastes 2 erstreckt und diese sowohl über ein unteres und oberes Leiterfahrwerk 71 an der unteren und oberen Fahrschiene 11, 12 abstützt bzw. diese entlang der Fahrschiene 11, 12 der Höhe und Seite nach geführt ist. Während des Betriebes des Regalbediengerätes 1 wird die Leiter 68 in einen außerhalb eines vorbestimmbaren Arbeitsraumes des Regalbediengerätes 1 liegenden Wartebereich verbracht, wobei die Warteposition der Leiter 68 über zumindest eine in dem hierfür vorgesehenen Wartebereich angeordnete Sensoranordnung überwacht wird. Wird das Regalbediengerät 1 außer Betrieb gesetzt, kann die Leiter 68 zu dem Regalbediengerät 1 zugestellt werden und ist diese in ihrer zugestellten Position über mechanische und/oder elektrische und/oder pneumatische und/oder hydraulische Verriegelungselemente entriegelbar an dem Regalbediengerät 1 angedockt oder über an der Leiter 68 vorgesehene Brems- und/oder Befestigungsvorrichtungen gegenüber der Aufstandsfläche 70 und/oder Fahrschiene 11; 12 gesichert positioniert. Die Leiter 68 kann manuell oder durch Vorsehen zumindest eines Antriebsorganes an zumindest einem der Leiterfahrwerke 71 automatisch bzw. fernbedienbar entlang der Fahrschiene 11; 12 verfahren. Derartige Leitern 68 sind bereits allgemeiner Stand der Technik und entsprechen auch den für diese Anwendung erforderlichen sicherheitstechnischen Aspekten.

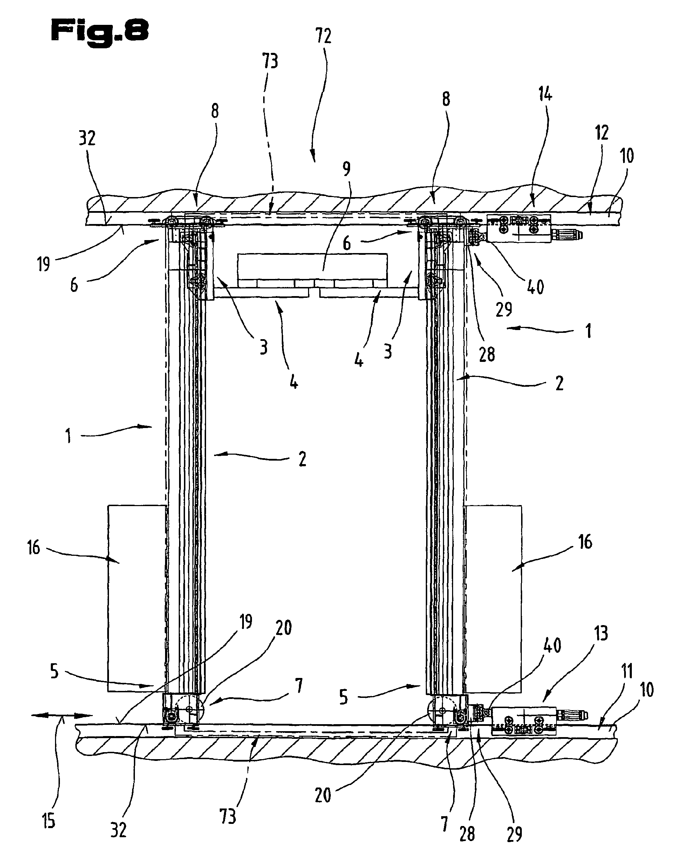

In der Fig. 8 ist eine beispielhafte Anordnung mehrerer Regalbediengeräte 1 zu einer aus diesen zusammengesetzten Regalbedienanlage 72 in Seitenansicht und in stark vereinfachter, schematischer Darstellung gezeigt. Die Regalbedienanlage 72 ist dabei durch mehrere hintereinander angeordnete und miteinander wirkungsverbundene Regalbediengeräte 1 gebildet. Die in Gassenrichtung - gemäß Doppelpfeil 15 - distanziert voneinander angeordneten Regalbediengeräte 1 werden über zwischen den Mästen 2, insbesondere deren unteren und oberen Fahrwerken 7, 8 vorgesehene Trägerrahmen 73 bevorzugt lösbar miteinander verbunden. Die Trägerrahmen 73 sind in strichpunktierten Linien schematisch dargestellt. Zweckmäßig sind die beiden Regalbediengeräte 1 an den Führungsbahnen bzw. Fahrschienen 11, 12 derart angeordnet, daß deren Lastaufnahmemittel 4 aufeinander zugerichtet sind und dadurch eine großflächige Last 9, wie beispielsweise eine Palette, aufgenommen werden kann. Die beiden Regalbediengeräte 1 sind mit ihren Fahrwerken 7, 8 auf den Führungsbahnteilen 10, 19, 32 der Führungsbahnen bzw. Fahrschienen 11, 12 geführt und zumindest eines der Regalbediengeräte 1 ist mit zumindest einem Kupplungsteil 28 zur Übertragung bzw. Beaufschlagung der Regalbedienanlage 72 mit der Vorschubbewegung versehen. Daher ist der Regalbedienanlage 72 nur ein, bevorzugt der untere Fahrantrieb 13 zugeordnet. Wie in dieser Fig. dargestellt, sind der Regalbedienanlage 72 zweckmäßig beide Fahrantriebe 13, 14 zugeordnet. Natürlich ist eine beliebige Aneinanderreihung mehrerer bevorzugt lösbar miteinander verbundener Regalbediengeräte 1 zur Bildung einer Großregalbedienanlage 72 möglich.

Natürlich können die Regalbediengeräte 1 auch derart angeordnet werden, daß deren Lastaufnahmemittel 4 voneinander abgewandt ausgerichtet sind.

Eine andere, nicht weiters dargestellte Ausführungsvariante besteht darin, daß mehrere Regalbediengeräte 1 in einem vorbestimmbaren Abstand zueinander gehalten und/oder in einem vorbestimmbaren Abstand miteinander verfahrbar sind und eine die Fahrantriebe 13, 14 ansteuernde Regelungseinrichtung zur Regelung desselben, anhand eines Programmes vorgesehen ist. Selbstverständlich ist es dadurch auch möglich, daß gleichzeitig mehrere von der Steuereinrichtung fernbedienbare Regalbediengeräte 1 frei verfahren, wobei, um Kollisionen zu vermeiden, ein Mindestabstand zwischen den Regalbediengeräten 1 eingehalten wird.

Wie in der Fig. 1 nachträglich eingetragen, ist es möglich, dem Regalbediengerät 1 zumindest ein Positionserfassungssystem 74 zuzuordnen, welches beispielsweise am Mast 2 und/oder am Fahrwerk 7, 8 und/oder am Fahrantrieb 13, 14 und/oder am Lastaufnahmemittel 4 angeordnet ist. Ein derartiges Positionserfassungssystem 74 kann durch eine Navigationsvorrichtung, insbesondere GPS, bestehend aus einer Sende- und/oder Empfangsvorrichtung 75 am Regalbediengerät 1, und einer nicht weiters dargestellten Sende- und/oder Empfangseinrichtung im vordefinierbaren Arbeitsbereich gebildet werden. Ein derartiges Positionserfassungssystem 74 hat den Vorteil, daß ein Standort des Regalbediengerätes 1 und/oder die Lage und/oder ein Abstand des Lastaufnahmemittels 4 zu einer Regalanlage und/oder einem Regalfach durch Erfassen der zugehörigen X-Y-Koordinaten festgelegt werden kann. Diese Koordinaten oder Daten, wie Geschwindigkeitsprofile, können an die Steuereinrichtung im Steuerschrank 16 und/oder an eine zentrale Steuereinrichtung eines Lagerverwaltungsrechners zur Weiterverarbeitung und/oder Ausgabe weitergeleitet werden.

Weiters ist es auch möglich, daß dem Regalbediengerät 1 an einer oder mehreren Stellen, wie im Bereich des Hubwagens 3 und/oder der Fahrwerken 7, 8 und/oder der Fahrantriebe 13, 14 zumindest ein bildverarbeitendes Element, insbesondere eine CCD-Kamera, zum Zwecke der Zustandsüberwachung, wie Verschleißverhalten an den Fahrwerke 7, 8 und/oder der Fahrantriebe 13, 14 oder Überwachung des Ein- und Auslagerns der Lasten 9 in Regalfächer etc., zugeordnet wird. Die daraus erfaßten Daten bzw. Bilder werden ebenfalls an die Steuereinrichtung im Schaltschrank 16 und/oder an eine zentrale Steuereinrichtung weitergeleitet und ausgewertet. Auf diese Weise können Wartung- und Instandhaltungspläne bzw. Diagnosen erstellt werden. Der Befehls- und/oder Daten- und/oder Signaltransfer erfolgt über nicht weiters dargestellte und bevorzugt weitestgehend im Innenraum des Mastes 2 verlegte Leitungen, insbesondere Busleitungen, und/oder auf berührungslosem Wege, wie Ultraschall- oder Infrarotübertragung, zu der Steuereinrichtung.

Weiters ist es Aufgabe der Steuereinrichtung, den Mast 2 etwa in seiner Senkrechtstellung zu halten, wozu entsprechende hochdynamische Gleichlaufregelungen der Antriebsmotoren der Fahrantriebe 13, 14 eingesetzt werden. Zweckmäßig sind dazu der untere und obere Antriebsmotor in der Leistung in etwa gleich stark ausgelegt, damit die horizontale Wegabweichung von Mastfuß 5 und Mastkopf 6 unter allen Betriebs- und/oder Belastungssituationen so gering wie möglich gehalten werden kann. Die Gleichlaufregelung hat die Aufgabe, das Regalbediengerät 1 unter allen Betriebsbedingungen in einer vorzugsweise lotrechten Mastausrichtung zu halten.

Um dies zu ermöglichen, wird eine an einer Auflagefläche des Lastaufnahmemittels 4 durch zwei Punkte definierte Bezugslinie festgelegt, die bei Senkrechtstellung des Mastes 2 horizontal ausgerichtet ist. Weicht der Mast 2 von seiner Senkrechtstellung ab, erfährt die Bezugslinie eine Neigungsänderung, die über zumindest eine am Lastaufnahmemittel 4 angeordnete neigungserfassende Sensoranordnung 76, z.B. Nivelliergerät, erfaßt wird. Die Neigungsänderung wird an die Steuereinrichtung übermittelt, wo anhand entsprechender Regelalgorithmen der permanent erfaßte Istwert mit einem vorgebbaren Sollwert der Neigung verglichen und an den Sollwert durch Ansteuerung der Antriebsvorrichtung 33 des unteren und/oder oberen Fahrantriebes 13; 14 angepaßt wird. Bevorzugt wird das Antriebsmoment des oberen Fahrantriebes 14 so lange verändert, bis das Lastaufnahmemittel 4 horizontal ausgerichtet ist. Durch das Nivellieren des Lastaufnahmemittels 4 wird gleichermaßen eine etwa lotrechte Ausrichtung des Mastes 2 erreicht, da das über den Hubwagen 3 am Mast 2 im wesentlichen der Höhe und Seite nach spielfrei geführte Lastaufnahmemittel 4 senkrecht auf den Mast 2 angeordnet ist.

Natürlich kann die Sensoranordnung 76 auch durch das Positionserfassungssystem 74 gebildet werden. Alternativ wäre es auch möglich, die jeweiligen Wege-Istwerte des Mastfußes 5 und Mastkopfes 6 an der unteren und oberen Fahrschiene 11, 12 zu erfassen. Die Wege-Istwerte werden mit den von der Steuerung vorgegebenen jeweiligen Sollwerten der Wege permanent verglichen. Bei einer Abweichung der Wege-Istwerte erfolgt eine selbsttätige Anpassung der Istwerte an die Sollwerte der Wege, indem das Antriebsdrehmoment eines Fahrantriebes 13; 14, bevorzugt des oberen Fahrantriebes 14 verstellt wird.

Um selbst bei hohen aufzunehmenden Lasten 9 einen geringen Schlupf zwischen den Antriebsrollen 37 und den Fahrschienen 11, 12 zu bewirken, ist es möglich, am Hubwagen 3 oder Lastaufnahmemittel 4 ein Gewichtsmeßorgan, insbesondere eine Wiegezelle, Kraftmeßdose etc., vorzusehen, über das das Gewicht der Last 9 bestimmt wird und durch eine Regeleinrichtung eine variable Anpreßkraft der Antriebsrollen 37 und/oder Andrückorgane 36 der Fahrantriebe 13, 14 geregelt verstellt wird und/oder die Neigung des Lastaufnahmemittels 4 über Veränderung der Position der übereinander angeordneten Fahrantriebe 13, 14 in Abhängigkeit des auf diesen wirkenden Momentes eingestellt wird. Die Verstellung der Anpreßkraft und der Neigung des Lastaufnahmemittels 4 kann über die die Kupplungsvorrichtung 29 bildende mechanische und/oder elektromechanische Kupplungsverbindung 27, insbesondere Stellelemente, wie beispielsweise Gewindespindel, erfolgen.

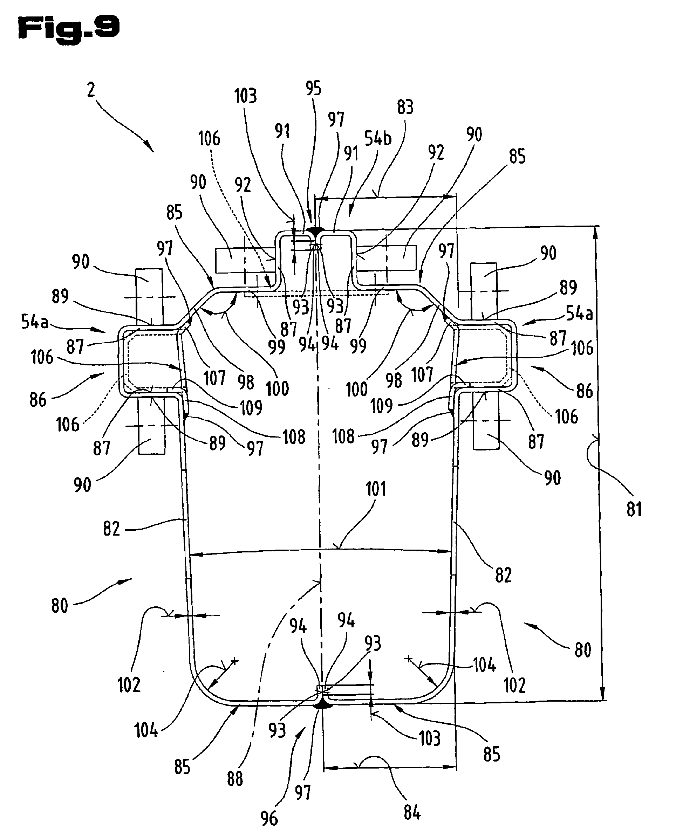

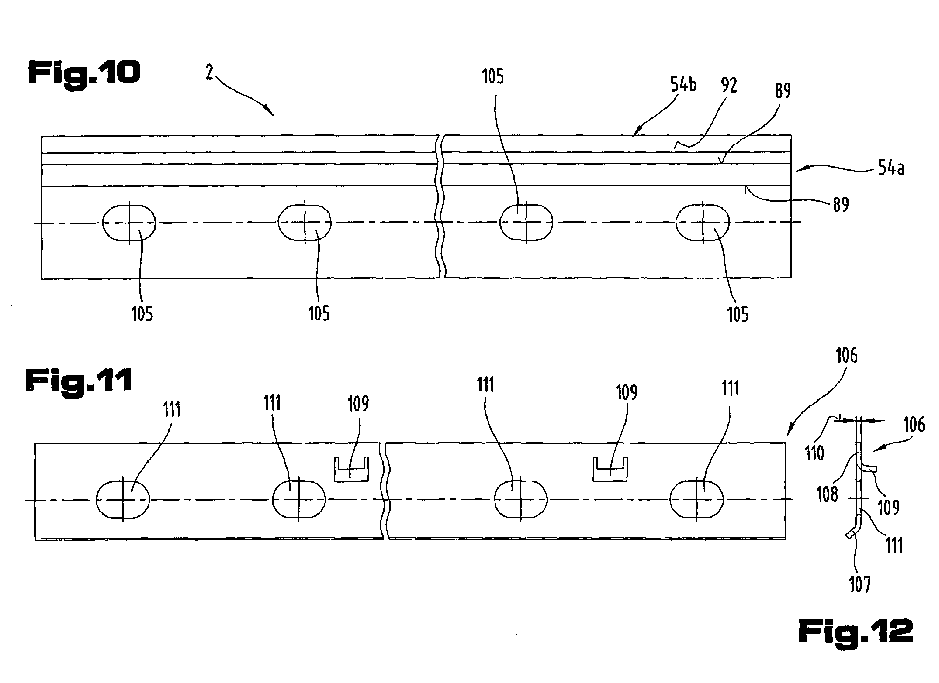

In den gemeinsam beschriebenen Fig. 9 und 12 ist nunmehr der Mast 2 für das in dieser Fig. nicht ersichtliche Regalbediengerät 1 in unterschiedlichen Ansichten und vereinfacht dargestellt.

Besonders bevorzugt kann in Verbindung mit der beschriebenen Hubvorrichtung 52 bzw. dem beschriebenen Regalbediengerät 1 der Mast 2 für das Regalbediengerät 1 bzw. die Hubvorrichtung 52 entsprechend den Darstellungen in den Fig. 1 bis 8 ausgebildet bzw. hergestellt sein.

Der Mast 2 ist aus zumindest zwei halbschalenförmigen Längsprofilen 80 mit in etwa C-förmigem Querschnitt zusammengesetzt. Eine Breite 81 einer Basis 82 der Längsprofile 80 ist größer als eine Höhe 83, 84 der dazu etwa senkrechten Schenkeln 85. Wie aus der Fig. 9 ersichtlich, ist die Breite 81 größer als die maximale Höhe 83 der Längsprofile 80. Der aus zumindest zwei miteinander zu einem Hohlprofil verbundenen Längsprofilen 80 gebildete Mast 2 ist im Querschnitt kreuzartig ausgebildet und an seinen einander gegenüberliegenden Breitseiten mit nach außen gerichteten, sich in Längsrichtung des Mastes 2 erstreckenden, etwa U-förmigen Ausbuchtungen 86 mit von der Basis 82 der Längsprofile 80 vorkragenden Profilstreifen 87 versehen. Jede der sich über die gesamte Mastlänge erstreckende U-förmige Ausbuchtung 86, insbesondere Profilstreifen 87, bilden in zu einer Längssymmetrieebene 88 senkrechten Ebenen verlaufende Laufflächen 89 für die Seitenführungsorgane bildende Laufräder 90 des am Mast 2 verstellbar geführten Hubwagens 3, wie in dieser Fig. nicht dargestellt, aus. Die Ausbuchtungen 86 bilden somit die an einander gegenüberliegenden Breitseiten des Mastes 2 in Längsrichtung desselben angeordneten Führungsbahnen 54a für die Seitenführungsorgane 53 bildende Laufräder 90 des Hubwagens 3 aus.

Jedes der etwa C-förmigen Längsprofile 80 bildet an einem seiner freien Enden einen etwa L-förmig gestalteten Fortsatz 91 aus, der an einer von der Symmetrieebene 88 abgewandten ersten Fläche als die Lauffläche 92 für das Seitenführungsorgane 53 bzw. Laufrad 90 des am Mast 2 verstellbar geführten Hubwagens 3 und eine der Längssymmetrieebene 88 zugewandte weitere Fläche als Stütz- und/oder Verbindungsfläche 93 ausbildet. Bei zusammengesetzten Längsprofilen 80 bilden die beiden Fortsätze 91 die weitere, im rechten Winkel zu den Führungsbahnen 54a an einer Schmalseite des Mastes 2 angeordnete und über die gesamte Mastlänge sich erstreckende Führungsbahn 54b bzw. Laufflächen 92 aus. Die Laufflächen 92 der in Längsrichtung des Mastes 2 verlaufenden und an den Schenkeln 85 der Längsprofile 80 vorkragenden Fortsätze 91 verlaufen parallel zueinander und parallel zu der Längssymmetrieebene 88. Die etwa L-förmig gestalteten Fortsätze 91 sind an ihren freien Enden mit etwa parallel zur Längssymmetrieebene 88 abstehenden, die Stütz- und/oder Verbindungsflächen 93 ausbildenden Längsrändern 94 versehen, die stumpf aneinandergelegt im Verbindungsbereich 95 zwischen den beiden miteinander zu verbindenden Längsprofilen 80 eine Hohlkehle ausbilden.

Die Schenkel 85 der Längsprofile 80 weisen an ihren den Fortsätzen 91 gegenüberliegenden freien Enden etwa parallel zur Längssymmetrieebene 88 ausgerichtete, die Stütz- und/oder Verbindungsflächen 93 ausbildenden Längsränder 94 auf, die stumpf aneinander gelegt im Verbindungsbereich 96 zwischen den beiden miteinander zu verbindenden Längsprofilen 80 eine Hohlkehle ausbilden. Die Verbindung zwischen den Längsprofilen 80 in den beiden Verbindungsbereichen 95, 96 entlang der Hohlkehle ist durch eine sich bevorzugt über die gesamte Mastlänge durchgehend erstreckende Lötnaht 97 gebildet.

Die zwischen den Ausbuchtungen 86 und den Fortsätzen 91 ausgebildeten Profilteile 98 von den Schenkeln 85 der Längsprofile 80 sind in Richtung der Breite 81 geneigt zueinander verlaufend angeordnet und verjüngen sich mit zunehmenden Abstand von den Ausbuchtungen 86 in Richtung der Fortsätze 91 bis zu senkrecht zur Längssymmetrieebene 88 angeordneten Profilteilen 99, an denen sich die mit den Laufflächen 92 versehenen und senkrecht auf die Profilteile 99 ausgerichteten Profilstreifen 87 der Fortsätze 91 anschließen. Ein Winkel 100 zwischen den Profilteilen 98, 99 beträgt zwischen 90 ° und 160 °, insbesondere zwischen 110 ° und 140 °, beispielsweise 135 °. Wie weiters aus der Fig. 9 ersichtlich, verläuft die Basis 82 der Längsprofile 80 geneigt zur Längssymmetrieebene 88 und verjüngen sich diese mit zunehmendem Abstand von den Ausbuchtungen 86 in Richtung der senkrecht zur Längssymmetrieebene 88 ausgerichteten Schenkeln 85. Der Winkel 101 zwischen der Basis 82 der beiden Längsprofile 80 beträgt zwischen 5 ° und 25 °, insbesondere zwischen 8 ° und 18 °, beispielsweise 10 °.

Die Längsprofile 80 sind symmetrisch ausgebildet und weisen über ihren Querschnitt eine etwa gleichbleibende Wandstärke 102, die zwischen 3 mm und 6 mm, beispielsweise 4 mm, beträgt, auf. Eine Überdeckungsbreite 103 der aneinandergelegten, planparallel zueinander verlaufenden Längsränder 94 der beiden Längsprofile 80 entspricht bevorzugt zumindest der dreifachen Wandstärke 102 und beträgt beispielsweise zwischen 9 mm und 18 mm, beispielsweise 12 mm. Zwischen der Basis 82 und dem Schenkel 85 ist eine Abrundung mit einem Radius 104 zwischen 40 mm und 80 mm, insbesondere 50 mm und 70 mm, beispielsweise 60 mm, vorgesehen.

Die Längsprofile 80 weisen an ihrer Basis 82 in Mastlängsrichtung mehrere, in Reihe hintereinander angeordnete, schlitzartige Ausnehmungen 105 auf, die vor allem dazu dienen, die Montage bzw. Verlegung, beispielsweise von innerhalb des Mastes 2 verlegten, energieführenden Leitungen, zu erleichtern, da über diese Ausnehmungen 105 ein Zutritt mit Werkzeug in den Innenraum des Mastes 2 ermöglicht wird.

Um selbst bei geringen Wandstärken 102 den Anforderungen der hohen statischen und dynamischen Belastbarkeit, wie beispielsweise Verdrehung, Biegebelastung etc., stand zu halten, ist es vorgesehen, die in Richtung des Innenraumes des Mastes 4 zugewandte, offene Seite der etwa U-förmigen Ausbuchtungen 86 mit jeweils zumindest einem, die seitlichen Anschlußbereiche zu den Ausbuchtungen 86 überlappenden, streifenartigen Versteifungselementen 106, wie diese gemeinsam mit den Fig. 11 und 12 beschrieben werden, zu verschließen bzw. die Anschlußbereiche mit zumindest einem Versteifungselement 106 miteinander zu verbinden. Das Versteifungselement 106 weist einen zum Schenkel 85, insbesondere zum Profilteil 98 des Längsprofiles 80, parallel verlaufenden und an diesen flächig anliegenden ersten Seitenrand 107 und einen zur Basis 82 des Längsprofiles 80 parallel verlaufenden und an diesen flächig anliegenden weiteren Seitenrand 108 sowie gegebenenfalls an einem der Seitenränder 108 zumindest zwei in Längsrichtung des Versteifungselementes 106 in Abstand voneinander angeordnete, seitlich abstehende und parallel zu dem einen Profilstreifen 87 verlaufende und an diesen flächig anliegende Positionierfortsätze 109 auf.

Die Versteifungselemente 106 erstrecken sich zweckmäßig über die gesamte Mastlänge und werden diese mittels zwei sich durchgehend erstreckende Lötnähte 97 zwischen den Seitenrändern 107, 108 und den Schenkeln 85 sowie der Basis 82 der Längsprofile 80 mit den Längsprofilen 80 kraftschlüssig verbunden. Andererseits ist es auch möglich, daß über die gesamte Mastlänge mehrere, unmittelbar übereinander und aneinanderstoßend oder in einem vertikalen Abstand voneinander getrennt angeordnete streifenartige Versteifungselemente 106 angeordnet werden, die jedes für sich mit über die Länge der Versteifungselemente 106 durchgehend erstreckenden Lötnähte zwischen den Seitenrändern 107, 108 und den Schenkeln 85 sowie der Basis 82 mit den Längsprofilen 80 verbunden sind.

Natürlich besteht auch Möglichkeit, daß die Verbindung zwischen den Längsprofilen 80 in den Verbindungsbereichen 95, 96 und/oder in den Verbindungsbereichen zwischen den Versteifungselementen 106 und den Längsprofilen 80 in mehreren Abschnitten über voneinander getrennte Lötnähte gebildet ist. Jedoch stellt die Ausführung der über die gesamte Mastlänge durchgehenden Lötnähte 97 in den Verbindungsbereichen 95, 96 und zwischen den Versteifungselementen 106 und den Längsprofilen 80 die bevorzugte Variante dar.

Wie in der Fig. 9 in strichlierten Linien schematisch eingetragen, können die Versteifungselemente 106 auch annähernd an die Querschnittsform der U-förmigen Ausbuchtungen 86 angepaßt werden und weisen diese ebenfalls einen etwa U-förmigen Querschnitt auf. Durch eine derartige Ausbildung kann die mechanische Belastbarkeit weiters angehoben werden, da sich in vorteilhafter Weise die Schenkel und/oder die Basis der Versteifungselemente 106 an der Innenkontur der Ausbuchtungen 106 zumindest bereichsweise abstützen. Andererseits, wie ebenfalls in der Fig. 9 in strichlierten Linien eingetragen, kann auch zwischen den miteinander zu einer etwa U-förmigen Führungsbahn 54b verbundenen L-förmig gestalteten Fortsätze 91 auf einer den Ausbuchtungen 86 zugewandten, offenen Seite der Führungsbahn 54b zumindest ein die seitlichen Anschlußbereiche zu den Fortsätzen 91 überlappendes, streifenartiges Versteifungselement 106 in Längsrichtung des Mastes 2 angeordnet sein. Das zumindest eine Versteifungselemente 106 ist über ein Verbindungselement, z.B. eine Schraubenverbindung, eine Lötverbindung, eine Nietverbindung etc., mit den beiden Schenkeln 85 der Längsprofile 80 fest verbunden. Natürlich können auch mehrere Versteifungselement 106 hintereinander in Längsrichtung des Mastes 2 angeordnet und jedes der Versteifungselemente 106 über das Verbindungselement 106 mit den Längsprofilen 80 verbunden werden und/oder annähernd die Querschnittsform der Führungsbahn 54b aufweisen. Durch diese Anordnung des zusätzlichen Versteifungselementes 106 können besonders hohe Lasten vom Mast 2 aufgenommen werden.

Eine Dicke 110 der Versteifungselemente 106 entspricht bevorzugt der Wandstärke 102. Natürlich können zur Anhebung der mechanischen Belastbarkeit des Mastes 2 die Versteifungselemente 106 auch eine zu der Wandstärke 102 mehrfache, z.B. die doppelte Dicke 110, aufweisen. Auch können im Versteifungselement 106 Ausnehmungen 111 zum Zweck der einfachen Montage und/oder Verlegung von z.B. energieführenden Leitungen, wie dies oben bereits ausführlich beschrieben wurde, angeordnet sein, die in Längsrichtung des Versteifungselementes 106 in Reihe hintereinander in einem Abstand voneinander angeordnet sind.

Die in den einzelnen Fig. gezeigten Längsprofile 80 sind aus einem ebenflächigen Zuschnitt aus Stahlblech im Rollverfahren oder Innenhochdruckumformverfahren hergestellt und an ihren Innen- und/oder Außenflächen mit einer Zinkschicht mit einer Dicke von beispielsweise 5 µm bis 20 µm, beispielsweise 10 µm, versehen. Die beiden Längsprofile 80 werden im Metall-Inertgas-Lötverfahren (MIG-Lötverfahren) oder im Lichtbogen- Lötverfahren fest miteinander verbunden. Als Zusatzwerkstoff für das Löten kommt ein auf Kupferbasis aufgebauter Zusatzwerkstoff, z.B. Cu Si 3 Mn Al zur Anwendung. Die Längsprofile 80 sind aus Stahl, insbesondere einem Feinkornbaustahl, gebildet.

Das Löten bringt den überraschenden Vorteil mit sich, daß durch die geringe Wärmezubringung während des Lötverfahrens die Zinkschicht im wesentlichen kaum vermindert wird und der geringfügig auftretende Zinkabbrand seitlich von den Lötnähten 97 keine Auswirkung auf die Korrosionsbeständigkeit hat, da die kathodische Fernschutzwirkung auch in den Verbindungsbereichen 95, 96 zwischen den Längsprofilen 80 sowie zwischen den Versteifungselementen 106 und den Längsprofilen 80 erhalten bleibt.

Von Vorteil ist auch die einfache Herstellung des aus den beiden Längsprofilen 80 hergestellten Mastes 2, da die bevorzugt im Rollverfahren hergestellten Längsprofile 80 bereits auf ihre Endabmessungen vorgefertigt werden, wonach jedes der Längsprofile 80 in einer Vorrichtung positioniert fixiert wird. Darauffolgend werden die Versteifungselemente 106 am Längsprofil 80 im Bereich der Ausbuchtungen 86 aufgelegt und über die Positionierfortsätze 109 gegenüber der Ausbuchtung 86 in zur Längssymmetrieebene 88 parallel verlaufenden Richtung und über den geneigten und parallel zum Profilteil 98 verlaufenden Längsrand 107 in zur Längssymmetrieebene 88 senkrecht verlaufender Richtung positioniert und sodann mit den Längsprofilen 80 in den Anschlußbereichen zu den Ausbuchtungen 86 kraftschlüssig verbunden. Nachfolgend werden die beiden Längsprofile 80 in ihrer gewünschten Lage zueinander ausgerichtet und mit ihren einander zugewandten, parallel zur Längssymmetrieebene 88 und planparallel zueinander verlaufenden Stütz- und/oder Verbindungsflächen 93 aneinandergelegt und an ihren durch die aneinanderstoßenden Längsränder 94 der beiden Längsprofile 80 gebildeten Hohlkehle miteinander verlötet. Gegebenenfalls kann nach dem Verbinden der beiden Längsprofile 80 zwischen den Fortsätze 91 auf einer den Ausbuchtungen 86 zugewandten, offenen Seite der Führungsbahn 54b zumindest ein streifenartiges Versteifungselement 106 positioniert eingelegt und beispielsweise von außen über Blindnieten, Schrauben, Lötnaht mit den Längsprofile 80 verbunden werden.

Von wesentlichem Vorteil ist, daß die Fertigungstoleranzen der im Rollverfahren aus einem ebenflächigen Zuschnitteil einstückig hergestellten Längsprofile 80 in den Verbindungsbereichen 95, 96 zwischen den beiden Längsprofilen 80 sowie zwischen den Versteifungselementen 106 und den Längsprofilen 80 durch den Zusatzwerkstoff ausgeglichen werden, wobei die erstarrte Lötnaht 97 gegenüber dem Werkstoff der Längsprofile 80 eine höheren Festigkeit aufweist.

Der Ordnung halber sei abschließend darauf hingewiesen, daß zum besseren Verständnis des Aufbaus des Regalbediengerätes 1 dieses bzw. deren Bestandteile teilweise unmaßstäblich und/oder vergrößert und/oder verkleinert dargestellt wurden.

### Bezugszeichenaufstellung

- 1: Regalbediengerät
- 2: Mast
- 3: Hubwagen
- 4: Lastaufnahmemittel
- 5: Mastfuß

- 6: Mastkopf
- 7: Fahrwerk (unten)
- 8: Fahrwerk (oben)
- 9: Last
- 10: Führungsbahnteil

- 11: Fahrschiene (unten)
- 12: Fahrschiene (oben)
- 13: Fahrantrieb (unten)
- 14: Fahrantrieb (oben)
- 15: Doppelpfeil

- 16: Schaltschrank
- 17: Steg
- 18: Obergurt
- 19: Führungsbahnteil
- 20: Höhenführungsorgan

- 21: Rotationsachse
- 22: Umrahmung
- 23: Seitenwand
- 24: Seitenführungsorgan
- 25: Rotationsachse

- 26: Rückenwand
- 27: Kupplungsverbindung
- 28: Kupplungsteil
- 29: Kupplungsvorrichtung
- 30: Höhenfuhrungsorgan

- 31: Seitenführungsorgan
- 32: Führungsbahnteil
- 33: Antriebsvorrichtung
- 34: Achse
- 35: Rotationsachse

- 36: Andrückorgan
- 37: Antriebsrolle
- 38: Gehäuse
- 39: Trägerrahmen
- 40: Kupplungsteil

- 41: Wangenteil
- 42a: Gelenkachse
- 42b: Gelenkachse
- 43: Führungsorgan
- 44: Längsführung
- 45: Führungsbahn

- 46: Fahrschemel
- 47: Schenkel
- 48: Basis
- 49: Abstreifleiste
- 50: Rückstellelement

- 51: Führungselement
- 52: Hubvorrichtung
- 53: Höhen- und/oder Seitenführungsorgan
- 54a: Führungsbahn
- 54b: Führungsbahn
- 55: Antriebsvorrichtung

- 56: Anlenkpunkt
- 57: Abstand
- 58: Anlenkpunkt
- 59: Hubmotor
- 60: Antriebsorgan

- 61: Doppelpfeil
- 62:
- 63:
- 64:
- 65: Aushebeschutz

- 66: Bügelendbereich
- 67: Stützelement
- 68: Leiter
- 69: Stützapparat
- 70: Aufstandsfläche

- 71: Leiterfahrwerk
- 72: Regalbedienanlage
- 73: Trägerrahmen
- 74: Positionserfassungssystem
- 75: Sende- und/oder Empfangseinrichtung

- 76: Sensoranordnung
- 77:
- 78:
- 79:
- 80: Längsprofil

- 81: Breite
- 82: Basis
- 83: Höhe
- 84: Höhe
- 85: Schenkel

- 86: Ausbuchtung
- 87: Profilstreifen
- 88: Längssymmetrieebene
- 89: Lauffläche
- 90: Laufrad

- 91: Fortsatz
- 92: Lauffläche
- 93: Stütz- und/oder Verbindungsfläche
- 94: Längsrand
- 95: Verbindungsbereich

- 96: Verbindungsbereich
- 97: Lötnaht
- 98: Profilteil
- 99: Profilteil
- 100: Winkel

- 101: Winkel
- 102: Wandstärke
- 103: Überdeckungsbreite
- 104: Radius
- 105: Ausnehmung

- 106: Versteifungselement
- 107: Seitenrand
- 108: Seitenrand
- 109: Positionierfortsatz
- 110: Dicke

- 111: Ausnehmung

## Patentansprüche

1. Regalbediengerät (1) mit einem in Richtung der Höhe eines Mastes (2) verfahrbaren Hubwagen (3) mit Lastaufnahmemittel (4), bei dem der Mast (2) mit an seinem Mastfuß (5) und Mastkopf (6) angeordneten Fahrwerken (7, 8) auf unteren und oberen Führungsbahnen geführt ist und entlang der unteren Führungsbahn eine kraftschlüssig wirkende Verstellvorrichtung als unterer Fahrantrieb (13) und an der oberen Führungsbahn eine kraftschlüssig wirkende Verstellvorrichtung als oberer Fahrantrieb (14) verfahrbar angeordnet ist, wobei die untere und obere Verstellvorrichtung mit Höhen- und Seitenführungsorganen (20, 24) auf den Führungsbahnen geführt und über eine mit zumindest einer Antriebsrolle (37) versehene Antriebsvorrichtung (33) relativ zu den Führungsbahnen verfahrbar ausgebildet sind und die Verstellvorrichtungen mit dem Mast (2) in Antriebsverbindung stehen, **dadurch gekennzeichnet, daß** zwischen den geführt verfahrbaren Fahrantrieben (13, 14) und Fahrwerken (7, 8) jeweils eine Kupplungsvorrichtung (29) vorgesehen ist, die zumindest zwei etwa senkrecht zur Längserstreckung der Führungsbahn gegeneinander verstellbare Kupplungsteile (28, 40) und zumindest eine zwischen den Gelenkachsen (42a, 42b) der Kupplungsteile (28, 40) angeordnete Kupplungsverbindung (27) umfaßt, die um eine der Gelenkachsen (42a; 42b) etwa senkrecht zur Längserstreckung der Führungsbahn gegenüber einem Kupplungsteil (28; 40) verschwenkbar und auf einer von dieser Gelenkachse (42a; 42b) abgewandten Seite über eine in etwa parallel zur Längserstreckung des Mastes (2) verlaufende Längsführung (44) verschiebbar gelagert ist.

2. Regalbediengerät nach Anspruch 1, **dadurch gekennzeichnet, daß** der mastseitige erste Kupplungsteil (28) am Fahrwerk (7) und fahrantriebsseitige erste Kupplungsteil (40) am Fahrantrieb (13) quer zum horizontalen Führungsbahnteil (19) der Führungsbahn in Richtung des Mastfußes (5) oder in zum Mastfuß (5) entgegengesetzter Richtung versetzt angeordnet ist.

3. Regalbediengerät nach Anspruch 1 oder 2, **dadurch gekennzeichnet, daß** der mastseitige weitere Kupplungsteil (28) am Fahrwerk (7) und fahrantriebsseitige erste Kupplungsteile (40) am Fahrantrieb (14) quer zum horizontalen Führungsbahnteil (19) der Führungsbahn in Richtung des Mastkopfes (6) oder in zum Mastkopf (6) entgegengesetzter Richtung versetzt angeordnet ist.

4. Regalbediengerät nach Anspruch 1, **dadurch gekennzeichnet, daß** die untere und obere Führungsbahn durch eine untere und obere Fahrschiene (11, 12) mit bevorzugt I-förmigem Querschnitt gebildet sind und zumindest ein Höhenführungsorgan (20) und Seitenführungsorgane (24) einer ersten Führungsvorrichtung des unteren Fahrwerkes (7) an einem horizontalen Führungsbahnteil (19) eines Obergurtes (18) und an einem vertikalen Führungsbahnteil (10) eines Steges (17) der unteren Fahrschiene (11) und Seitenführungsorgane (24) einer weiteren Führungsvorrichtung des oberen Fahrwerkes (8) an einem vertikalen Führungsbahnteil (10) eines Steges (17) der oberen Fahrschiene (12) anliegen.

5. Regalbediengerät nach Anspruch 1 oder 4, **dadurch gekennzeichnet, daß** jeder der Fahrantriebe (13, 14) bevorzugt zumindest zwei in Gassenrichtung (15) voneinander distanziert angeordnete Paare von beidseits des Steges (17) der bevorzugt I-förmig ausgebildeten Fahrschienen (11, 12) an voneinander abgekehrten Führungsbahnteilen (19, 32) der unteren und oberen Fahrschiene (11, 12) anliegenden Höhenführungsorganen (30) und zumindest ein an voneinander abgekehrten Führungsbahnteilen (32, 19) der unteren und oberen Fahrschiene (11, 12) anliegendes Andrückorgan (36) und zumindest zwei in Gassenrichtung (15) voneinander distanziert angeordnete Paare von an gegenüberliegenden Führungsbahnteilen (10) des Steges (17) anliegenden Seitenführungsorganen (31) aufweist.

6. Regalbediengerät nach einem der Ansprüche 1 bis 5, **dadurch gekennzeichnet, daß** die an Führungsbahnteilen (19, 32) abrollbar anliegenden Höhenführungsorgane (30) und an Führungsbahnteilen (32, 19) anpreßbar anliegenden Andrückorgane (36) durch um quer zur Längserstreckung der Fahrschienen (11, 12) verlaufende Achsen (34) rotierende Höhenfiihrungsrollen und Druckrollen und die abrollbar anliegenden Seitenführungsorgane (31) durch um eine senkrecht zur Längserstreckung der Fahrschienen (11, 12) verlaufende Rotationsachsen (35) rotierende Seitenführungsrollen gebildet sind.

7. Regalbediengerät nach Anspruch 1, **dadurch gekennzeichnet, daß** die Höhen- und Seitenführungsorgane (30, 31) der Fahrantriebe (13, 14) durch an den Führungsbahnteilen (19, 32, 10) der Fahrschienen (11, 12) mit einer vorbestimmbaren Anpreßkraft andrückbare Führungsleisten gebildet sind.

8. Regalbediengerät nach Anspruch 5, **dadurch gekennzeichnet, daß** die Fahrantriebe (13, 14) zumindest eine angetriebene Antriebsrolle (37) und zumindest ein Gegenrad oder eine weitere angetriebene Antriebsrolle (37) aufweist, die jeweils an den gegenüberliegenden Führungsbahnteilen (10) der Stege (17) der Fahrschienen (11, 12) angepreßt sind und daß die Antriebsrolle (37) und das Gegenrad oder die weitere Antriebsrolle (37) zwischen den hintereinander liegenden Höhenführungsorganen (30) angeordnet sind.

9. Regalbediengerät nach Anspruch 1, **dadurch gekennzeichnet, daß** die Höhen- und/oder Seitenführungsorgane (30, 31) der Fahrantriebe (13, 14) jeweils auf einem gemeinsamen Tragrahmen angeordnet sind und die Höhen- und/oder Seitenführungsorgane (30, 31) unter der Wirkung zumindest einer auf den Tragrahmen wirkenden Anpreßkraft gegen die Führungsbahnteile (19, 32, 10) der Führungsbahnen preßbar sind.

10. Regalbediengerät nach einem der Ansprüche 1 bis 9, **dadurch gekennzeichnet, daß** die Höhen- und Seitenfiihrungs- und Andrückorgane (20, 24; 30, 31, 36) der Fahrwerke (7, 8) und Fahrantriebe (13, 14) durch Elastomere, vorzugsweise Thermoplaste, oder aus Stahl mit einer diese umgebenden Kunststoffummantelung gebildet sind.

11. Regalbediengerät nach Anspruch 1, **dadurch gekennzeichnet, daß** der Mast (2) im wesentlichen lotrecht ausgerichtet ist und daß der untere und obere Fahrantrieb (13, 14) vorzugsweise an einer Rückseite des Mastes (2) übereinander angeordnet sind.

12. Regalbediengerät nach Anspruch 1, **dadurch gekennzeichnet, daß** die Fahrantriebe (13, 14) und der Mast (2) mit den Fahrwerken (7, 8) jeweils eine eigene Baueinheit bilden und daß die mit einer Vorschubkraft über den Kupplungsteil (28) beaufschlagbaren Fahrwerke (7, 8) mit den Fahrantrieben (13, 14) bevorzugt lösbar verbunden sind.

13. Regalbediengerät nach Anspruch 1, **dadurch gekennzeichnet, daß** die unangetriebenen Fahrwerke (7, 8) von dem Mast (2) ausgebildet oder daß diese mit dem Mastfuß (5) und Mastkopf (6) starr verbunden sind.

14. Regalbediengerät nach einem der Ansprüche 1 bis 13, **dadurch gekennzeichnet, daß** die Fahrwerke (7, 8) jeweils einen um seine quer zur Gassenrichtung (15) verlaufende Mittelachse verschwenkbeweglichen Fahrschemel (46) aufweisen und daß der die Fahrschienen (11, 12) zumindest teilweise umgreifende Fahrschemel (46) im Querschnitt etwa U-förmig ausgebildet ist und an seinen bevorzugt parallel zu dem Steg (17) verlaufenden Schenkeln (47) die an den Führungsbahnteilen (10) der Stege (17) anliegenden Seitenführungsorgane (24) aufweist.

15. Regalbediengerät nach Anspruch 14, **dadurch gekennzeichnet, daß** die die Seitenführungsorgane (24) tragenden Fahrschemel (46) der Fahrwerke (7, 8) bei einer Schiefstellung des Mastes (2) über mechanisch und/oder elektrisch und/ oder hydraulisch und/oder pneumatisch betätigbare Mittel, insbesondere Rückstellelemente (50), selbsttätig in eine vorbestimmbare, horizontale Lage verbringbar sind.

16. Regalbediengerät nach Anspruch 14 oder 15, **dadurch gekennzeichnet, daß** eine sich zwischen den Schenkeln (47) erstreckende Basis (48) an ihrer dem horizontalen Führungsbahnteil (19) zugewandten Unterseite mit zumindest einer an dem Führungsbahnteil (19) angepaßten und an diesem anliegenden sowie in Richtung der Fahrschiene (11, 12) eine Anpreßkraft erzeugenden Abstreifleiste (49) ausgestattet ist.

17. Regalbediengerät nach Anspruch 1, **dadurch gekennzeichnet, daß** die Fahrantriebe (13, 14) über die Kupplungsvorrichtung (29) zumindest in Gassenrichtung (15) spielfrei mit dem Mastfuß (5) und Mastkopf (6) und/oder den Fahrwerken (7, 8) bevorzugt lösbar verbunden sind.

18. Regalbediengerät nach Anspruch 1, **dadurch gekennzeichnet, daß** die Kupplungsvorrichtung (29) zumindest eine, bevorzugt zwei in quer zur Längserstreckung der Führungsbahnen in einem Abstand zueinander angeordnete und um die fahrantriebsseitigen Kupplungsteile (40) verschwenkbeweglich gelagerte Kupplungsverbindungen (27), insbesondere Wangenteile (41), aufweist, die bevorzugt etwa dreieckförmig ausgebildet sind.

19. Regalbediengerät nach Anspruch 18, **dadurch gekennzeichnet, daß** der Wangenteil (41) an seinen dem Fahrwerk (7, 8) zugewandten Eckbereichen jeweils ein an diesen verdrehbeweglich gelagertes Führungsorgan (43) und etwa im Bereich eines Schwerpunktes des Wangenteiles (41) zumindest ein weiteres, gegenüber diesen relativ verstellbares Führungsorgan (43) aufweist.

20. Regalbediengerät nach Anspruch 1, **dadurch gekennzeichnet, daß** der Kupplungsteil (28) zwei voneinander distanzierte profilartige Längsführungen (44) mit von diesen ausgebildeten Führungsbahnen (45), die mit den an den Wangenteilen (41) angeordneten Führungsorganen (43) zur Führung des Mastes (2) in seiner Längsrichtung korrespondieren, aufweist.

21. Regalbediengerät nach Anspruch 1, **dadurch gekennzeichnet, daß** die Kupplungsverbindung (27) durch ein gabel- oder stangenartiges Knickgelenk oder einen mechanisch und/oder elektrisch ansteuerbaren Stellantrieb, insbesondere längenveränderbaren Gewindespindelantrieb, gebildet ist.

22. Regalbediengerät nach Anspruch 1, **dadurch gekennzeichnet, daß** zwischen dem Mastfuß (5) und der unteren Fahrschiene (11) sowie dem Mastkopf (6) und der oberen Fahrschiene (12) jeweils zumindest ein Aushebeschutz (65) angeordnet ist.

23. Regalbediengerät nach Anspruch 22, **dadurch gekennzeichnet, daß** das Fahrwerk (7, 8) mit dem die Fahrschiene (11, 12) bereichsweise umgreifenden bügelartigen Aushebeschutz (65) ausgestattet und dieser an seinen freien Bügelendbereichen (66) mit Stützelementen (67), wie Kufen, Räder, versehen ist und daß bei Schiefstellung des Mastes (2) über einen vorgegebenen Grenzwert hinaus die Stützelemente (67) an den voneinander abgewandten Führungsbahnteilen (32) der unteren und oberen Fahrschienen (11, 12) abgestützt sind.

24. Regalbediengerät nach Anspruch 1, **dadurch gekennzeichnet, daß** dem Regalbediengerät (1) im Bereich des Mastes (2) und/oder der Fahrwerke (7, 8) und/oder der Fahrantriebe (13, 14) und/oder des Lastaufnahmemittels (4) zumindest ein Positionserfassungssystem (74) zugeordnet ist, mit welchem der Standort des Regalbediengerätes (1) im Arbeitsbereich und/oder die Position des Hubwagens (3) und/oder Lastaufnahmemittels (4) feststellbar ist.

25. Regalbediengerät nach Anspruch 1, **dadurch gekennzeichnet, daß** dem Regalbediengerät (1) im Bereich des Hubwagens (3) und/oder der Fahrwerke (7, 8) und/oder der Fahrantriebe (13, 14) zumindest eine CCD-Kamera oder eine Sensoranordnung zugeordnet ist.

26. Regalbediengerät nach Anspruch 1, **dadurch gekennzeichnet, daß** der Hubwagen (3) mit Höhen- und Seitenführungsorganen (53) auf zumindest einer Führungsbahn (54) am Mast (2) im wesentlichen spielfrei geführt ist und daß das Lastaufnahmemittel (4) senkrecht auf den Mast (2) ausgerichtet ist und zur Erfassung einer Abweichung des Lastaufnahmemittels (4) aus seiner horizontalen Ausrichtung am Hubwagen (3) oder Lastaufnahmemittel (4) zumindest eine Sensoranordnung (76) und eine einen Istwert erfassende Regelungsvorrichtung zur Regelung der horizontalen Ausrichtung des Lastaufnahmemittels (4) durch Ansteuerung zumindest eines Fahrantriebes (13; 14) vorgesehen ist.

27. Regalbediengerät nach einem der Ansprüche 1 bis 10, **dadurch gekennzeichnet, daß** eine vom Hubwagen (3) aufzunehmende Last (9) über Gewichtsmeßorgane, insbesondere Wiegezelle, erfaßt und über eine Regelungseinrichtung eine variable Anpreßkraft der Antriebsrollen (37) und/oder Andrückorgane (36) der Fahrantriebe (13, 14) durch ansteuerbare mechanische und/oder elektromechanische Stellelemente, wie Gewindespindel, geregelt verstellt wird und/oder die Neigung des Mastes (2) durch Veränderung der Position der übereinander angeordneten Fahrantriebe (13, 14) in Abhängigkeit des auf diesen wirkenden Momentes einstellbar ist.

28. Regalbediengerät nach Anspruch 1, **dadurch gekennzeichnet, daß** der Mast (2) aus zumindest zwei halbschalenförmigen Längsprofilen (80) mit in etwa C-förmigem Querschnitt zusammengesetzt ist und eine Breite (81) einer Basis (82) des C-förmigen Querschnittes größer ist als eine Höhe (83) von dazu etwa senkrechten Schenkeln (85) und diese Längsprofile (80) in einer achsparallelen und eine Längssymmetrieebene (88) des Mastes (2) einschließenden Fügeebene miteinander verbunden sind und/oder die Längsprofile (80) über eine Lötverbindung kraftschlüssig zusammengefügt sind.

29. Regalbediengerät nach Anspruch 28, **dadurch gekennzeichnet, daß** an den beiden der miteinander zu einem Hohlprofil verbundenen Längsprofilen (80) nach außen gerichtete, sich in Längsrichtung des Mastes (2) erstreckende, etwa U-förmige Ausbuchtungen (86) mit von der Basis (82) der Längsprofile (80) vorkragenden Profilstreifen (87) ausgebildet sind und die Profilstreifen (87) Laufflächen (89) für Laufräder (90) des am Mast (2) verstellbar geführten Hubwagens (3) ausbilden, wobei die beiden einander gegenüberliegenden Laufflächen (89) einer jeden Ausbuchtung (86) parallel zueinander und in zur Längssymmetrieebene (88) senkrechten Ebenen sowie die Laufflächen (89) der einander gegenüberliegenden Ausbuchtungen (86) fluchtend zueinander verlaufen.

30. Regalbediengerät nach Anspruch 28, **dadurch gekennzeichnet, daß** jedes der im Querschnitt etwa C-förmigen Längsprofile (80) an einem seiner ersten freien Enden einen etwa L-förmig gestalteten Fortsatz (91) ausbildet, der eine zu der Längssymmetrieebene (88) abgewandte erste Fläche als Lauffläche (92) für die Laufräder (90) des am Mast (2) verstellbar geführten Hubwagens (3) und eine die Längssymmetrieebene (88) einschließende, zugewandte weitere Fläche als Stütz- und/oder Verbindungsflächen (93) ausbildet, wobei die beiden Laufflächen (92) der Fortsätze (91) parallel zueinander und in zur Längssymmetrieebene (88) paralleler Ebene verlaufen.

31. Regalbediengerät nach Anspruch 30, **dadurch gekennzeichnet, daß** die etwa L-förmig gestalteten Fortsätze (91) an ihren freien Enden etwa parallel zur Längssymmetrieebene (88) vorkragende, die Stütz- und/oder Verbindungsflächen (93) bildenden Längsränder (94) aufweisen, die im ersten Verbindungsbereich (95) zwischen den beiden stumpf aneinandergelegten Längsprofilen (80) eine Hohlkehle für die Lötnaht (97) ausbilden.

32. Regalbediengerät nach einem der Ansprüche 28 bis 30, **dadurch gekennzeichnet, daß** die Schenkel (85) der Längsprofile (80) an ihren den Fortsätzen (91) gegenüberliegenden, weiteren freien Enden etwa parallel zur Längssymmetrieebene (88) vorkragende, die Stütz- und/oder Verbindungsflächen (93) bildende Längsränder (94) aufweisen, die im weiteren Verbindungsbereich (96) zwischen den beiden stumpf aneinandergelegten Längsprofilen (80) eine Hohlkehle für die Lötnaht (97) ausbilden.

33. Regalbediengerät nach einem der Ansprüche 28 bis 32, **dadurch gekennzeichnet, daß** eine der Längssymmetrieebene (88) zugewandte, offene Seite der etwa U-förmigen Ausbuchtungen (86) mit jeweils zumindest einem die seitlichen Anschlußbereiche zu den Ausbuchtungen (86) überlappenden, streifenartigen Versteifungselement (106) geschlossen ist und die Versteifungselemente (106) über eine Lötverbindung kraftschlüssig mit den Längsprofilen (80) verbunden sind.

34. Regalbediengerät nach einem der Ansprüche 28 bis 30, **dadurch gekennzeichnet, daß** die Längsprofile (80) symmetrisch ausgebildet sind und über ihren Querschnitt eine etwa gleichbleibende Wandstärke (102) aufweisen.

35. Regalbedienanlage, bei der mehrere hintereinander angeordnete Regalbediengeräte (1) mit Höhen- und Seitenführungsorganen (20, 24) auf Führungsbahnen geführt und über zumindest einen Fahrantrieb (13, 14) entlang der Führungsbahnen verfahrbar ausgebildet sind, wobei die Regalbediengeräte (1) miteinander gekoppelt sind, **dadurch gekennzeichnet, daß** die Regalbediengeräte (1) nach einem der Ansprüche 1 bis 34 ausgebildet sind.

36. Regalbedienanlage nach Anspruch 35, **dadurch gekennzeichnet, daß** die in Gassenrichtung (15) distanziert voneinander angeordneten Regalbediengeräte (1) über zwischen den Mästen (2), insbesondere den Mastfüßen (5) und Mastköpfen (6), vorgesehene Trägerrahmen (73) bevorzugt lösbar miteinander verbunden sind und daß die bevorzugt synchron verstellbaren Lastaufnahmemittel (4) aufeinander zugerichtet sind und wenigstens eines der Regalbediengeräte (1) zumindest einen, bevorzugt den unteren und/oder oberen Fahrantrieb (13, 14) aufweist.

37. Regalbedienanlage nach Anspruch 35, **dadurch gekennzeichnet, daß** die Regalbediengeräte (1) in einem vorbestimmbaren Abstand zueinander gehalten und/oder in einem vorbestimmbaren Abstand miteinander verfahrbar sind und eine Regelungseinrichtung zur Regelung dieses Abstandes durch Steuerung der Fahrantriebe (13, 14) der Regalbediengeräte (1) vorgesehen ist und daß die verstellbaren Lastaufnahmemittel (4) voneinander abgewandt ausgerichtet sind.

## Claims

1. Loading/unloading device (1) for shelving, with a lift carriage (3) with a load bearing means (4) which can be displaced in the direction of the height of a mast (2), which mast (2) is guided by bogie assemblies (7, 8) provided at its mast foot (5) and mast head (6) on bottom and top guide tracks and a non-positively acting displacement mechanism displaceable along the bottom guide track is provided as a bottom displacement drive (13) and a non-positively acting displacement mechanism displaceable along the top guide track is provided as a top displacement drive (14), and the bottom and top displacement mechanisms are guided on the guide tracks by means of height and lateral guide elements (20, 24) and are designed to be displaceable relative to the guide tracks by means of a drive mechanism (33) provided with at least one drive roller (37), and the displacement mechanisms are drivingly connected to the mast (2), **characterised in that** a coupling mechanism (29) is provided respectively between the guided, displaceable displacement drives (13, 14) and bogie assemblies (7, 8) , which has at least two coupling parts (28, 40) which can be moved towards one another more or less perpendicular to the longitudinal extension of the guide track and at least one coupling connection (27) disposed between the articulation axes (42a, 42b) of the coupling parts (28, 40) which can be pivoted about one of the articulation axes (42a; 42b) more or less perpendicular to the longitudinal extension of the guide track relative to a coupling part (28; 40) and is mounted so that it can slide on a longitudinal guide (44) extending essentially parallel with the longitudinal extension of the mast (2) at an end remote from this articulation axis (42a; 42b).

2. Loading/unloading device for shelving as claimed in claim 1, **characterised in that** the mast-side first coupling part (28) is disposed on the bogie assembly (7) and the drive-side first coupling part (40) is disposed on the displacement drive (13) transversely to the horizontal guide track part (19) of the guide track offset in the direction of the mast foot (5) or in the direction opposite the mast foot (5).

3. Loading/unloading device for shelving as claimed in claim 1 or 2, **characterised in that** the mast-side other coupling part (28) is disposed on the bogie assembly (7) and the drive-side first coupling part (40) is disposed on the displacement drive (14) transversely to the horizontal guide track part (19) of the guide track in the direction of the mast head (6) or in the direction opposite the mast head (6).

4. Loading/unloading device for shelving as claimed in claim 1, **characterised in that** the bottom and top guide track are provided in the form of a bottom and top runner rail (11, 12) with a preferably I-shaped cross section, and at least one height guide element (20) and lateral guide elements (24) of a first guide mechanism of the bottom bogie assembly (7) lie against a horizontal guide track part (19) of a top belt (18) and against a vertical guide track part (10) of a web (17) of the bottom runner rail (11), and lateral guide elements (24) of a guide mechanism of the top bogie assembly (8) sit against a vertical guide track part (10) of a web (17) of the top runner rail (12).

5. Loading/unloading device for shelving as claimed in claim 1 or 4, **characterised in that** each of the displacement drives (13, 14) preferably co-operates with at least two pairs of height guide elements (30) spaced at a distance apart from one another in the aisle direction (15) on either side of the web (17) of the preferably I-shaped runner rails (11, 12) lying against mutually remote guide track parts (19, 32) of the bottom and top runner rail (11, 12), and has at least one contact element (36) lying against mutually remote guide track parts (32, 19) of the bottom and top runner rail (11, 12) and at least two pairs of lateral guide elements (31) spaced at a distance apart from one another in the aisle direction (15) lying against oppositely lying guide track parts (10) of the web (17).

6. Loading/unloading device for shelving as claimed in one of claims 1 to 5, **characterised in that** the height guide elements (30) are disposed so that they can roll on guide track parts (19, 32) and contact elements (36) which can be pressed against the guide track parts (32, 19) are provided in the form of height guide rollers and pressure rollers rotating about axes (34) extending transversely to the longitudinal extension of the runner rails (11, 12), and the adjacent rolling lateral guide elements (31) are provided in the form of lateral guide rollers rotating about rotation axes (35) extending perpendicular to the longitudinal extension of the runner rails (11, 12).

7. Loading/unloading device for shelving as claimed in claim 1, **characterised in that** the height and lateral guide elements (30, 31) of the displacement drives (13, 14) are provided in the form of guide bars which can be pressed against the guide track parts (19, 32, 10) of the runner rails (11, 12) with a pre-definable contact force.

8. Loading/unloading device for shelving as claimed in claim 5, **characterised in that** the displacement drives (13, 14) have at least one driven drive roller (37) and at least one follower wheel or another driven drive roller (37), which are respectively applied against the oppositely lying guide track parts (10) of the webs (17) of the runner rails (11, 12), and the drive roller (37) and the follower wheel or the other drive roller (37) are disposed between the height guide elements (30) arranged one after the other.

9. Loading/unloading device for shelving as claimed in claim 1, **characterised in that** the height and/or lateral guide elements (30, 31) of the displacement drives (13, 14) are respectively disposed on a common support frame and the height and/or lateral guide elements (30, 31) can be pressed against the guide track parts (19, 32, 10) of the guide tracks due to the effect of at least one pressing force acting on the support frame.

10. Loading/unloading device for shelving as claimed in one of claims 1 to 9, **characterised in that** the high and lateral guide and contact elements (20, 24; 30, 31, 36) of the bogie assemblies (7, 8) and displacement drives (13, 14) are made from elastomers, preferably thermoplastic materials, or from steel enclosed in a plastic sheath.

11. Loading/unloading device for shelving as claimed in claim 1, **characterised in that** the mast (2) is essentially vertically aligned and the bottom and top displacement drives (13, 14) are preferably arranged one above the other on a rear face of the mast (2).

12. Loading/unloading device for shelving as claimed in claim 1, **characterised in that** the displacement drives (13, 14) and the mast (2) with the bogie assemblies (7, 8) respectively form a single unit and the bogie assemblies (7, 8), to which a forward motion can be transmitted via the coupling part (28), are connected to the displacement drives (13, 14), preferably releasably.

13. Loading/unloading device for shelving as claimed in claim 1, **characterised in that** the non-driven bogie assemblies (7, 8) are constituted by the mast (2) or are rigidly connected to the mast foot (5) and mast head (6).

14. Loading/unloading device for shelving as claimed in one of claims 1 to 13, **characterised in that** the bogie assemblies (7, 8) each have a runner (46) which can be displaced in a pivoting motion about a mid-axis extending transversely to the aisle direction (15), and the runner (46) at least partially engaging round the runner rails (11, 12) has a U-shaped cross section and has lateral guide elements (24), preferably on its legs (47) extending parallel with the web (17), which lie against the guide track parts (10) of the webs (17).

15. Loading/unloading device for shelving as claimed in claim 14, **characterised in that** the runner (46) of the bogie assemblies (7, 8) supporting the lateral guide elements (24) can automatically be returned to a predefined horizontal position by means of mechanically and/or electrically and/or hydraulically and/or pneumatically operated means, in particular return elements (50), if the mast (2) assumes a crooked position.

16. Loading/unloading device for shelving as claimed in claim 14 or 15, **characterised in that** a base (48) extending between the legs (47) is fitted with at least one wiper bar (49) on its bottom face directed towards the guide track part (19) which is adapted to the guide track part (19) and sits against it, which is capable of generating a contact force in the direction of the runner rail (11, 12).

17. Loading/unloading device for shelving as claimed in claim 1, **characterised in that** the displacement drives (13, 14) are linked, preferably releasably, via the coupling mechanism (29) to the mast foot (5) and mast head (6) and/or the bogie assemblies (7, 8) without any clearance in the aisle direction (15).

18. Loading/unloading device for shelving as claimed in claim 1, **characterised in that** the coupling mechanism (29) has at least one, preferably two, coupling connections (27) spaced at a distance apart from one another, mounted so as to pivot about the drive-side coupling parts (40), in particular jaw parts (41), which are preferably triangular in shape.

19. Loading/unloading device for shelving as claimed in claim 18, **characterised in that,** at its end regions facing the bogie assembly (7, 8), the jaw part (41) has mounted on it a rotatable guide element (43) and, relatively displaceable to it, at least one other guide element (43), essentially in the region of a centre of gravity of the jaw part (41).

20. Loading/unloading device for shelving as claimed in claim 1, **characterised in that** the coupling part (28) has two section-type longitudinal guides (44) spaced at a distance apart from one another with guide tracks (45) formed thereby, which complement the guide elements (43) on the jaw parts (41) in order to guide the mast (2) in its longitudinal direction.

21. Loading/unloading device for shelving as claimed in claim 1, **characterised in that** the coupling connection (27) is of a fork-type or rod-type elbow rod or a mechanically and/or electrically controllable actuator drive, in particular a length-adjustable threaded spindle drive.

22. Loading/unloading device for shelving as claimed in claim 1, **characterised in that** an anti-lift device (65) is disposed respectively between the mast foot (5) and the bottom runner rail (11) and between the mast head (6) and the top runner rail (12).

23. Loading/unloading device for shelving as claimed in claim 22, **characterised in that** the bogie assembly (7, 8) is fitted with a bracket-shaped anti-lift device (65) which engages around certain regions of the runner rail (11, 12) and is provided with support elements (67) at its free bracket end regions (66), such as skids, wheels, and if the mast (2) assumes a crooked position exceeding a pre-set threshold value, the support elements (67) are supported on the mutually remote guide track parts (32) of the bottom and top runner rails (11, 12).

24. Loading/unloading device for shelving as claimed in claim 1, **characterised in that** at least one position detection system (74) is assigned to the shelving loading/unloading device (1), in particular in the region of the mast (2) and/or the bogie assemblies (7, 8) and/or the displacement drives (13, 14) and/or the load-bearing means (4), by means of which the location of the shelving loading/unloading device (1) in the working area and/or the position of the lift carriage (3) and/or the load bearing means (4) can be ascertained.

25. Loading/unloading device for shelving as claimed in claim 1, **characterised in that** CCD camera or a sensor system is assigned to the shelving loading/unloading device (1), preferably in the region of the lift carriage (3) and/or the bogie assemblies (7, 8) and/or the displacement drives (13, 14).

26. Loading/unloading device for shelving as claimed in claim 1, **characterised in that** the lift carriage (3) is guided on a guide track (54) on the mast (2), essentially without any clearance, by means of height and lateral guide elements (53) and the load-bearing means (4) is oriented perpendicular to the mast (2), and at least one sensor system (76) is provided in order to detect a deviation of the load-bearing means (4) from its horizontal orientation on the lift carriage (3) or load-bearing means (4), and a control system is provided which detects the actual value and controls the horizontal orientation of the load-bearing means (4) by activating at least one displacement drive (13; 14).

27. Loading/unloading device for shelving as claimed in one of claims 1 to 10, **characterised in that** a load (9) to be carried by the lift carriage (3) is detected by weight measuring elements, in particular a weighing cell, and a variable contact force of the drive rollers (37) and/or contact elements (36) of the displacement drives (13, 14) is adjusted and regulated via a control system by means of mechanically and/or electromechanically activatable actuators, such as a threaded spindle, and/or the inclination of the mast (2) can be set by varying the position of the displacement drives (13, 14) disposed one above the other depending on the torque acting on them.

28. Loading/unloading device for shelving as claimed in claim 1, **characterised in that** the mast (2) is made up of two half-shell elongate sections (80) with a substantially C-shaped cross section and a width (81) of a base (82) of the C-shaped cross section is longer than a height (83) of legs (85) substantially perpendicular thereto, and these elongate sections (80) are joined to one another in a joint plane containing an axially parallel plane and a plane of longitudinal symmetry (88) of the mast (2), and/or the elongate sections (80) are non-positively assembled by a welded joint.

29. Loading/unloading device for shelving as claimed in claim 28, **characterised in that** outwardly directed, substantially U-shaped protuberances (86) extending in the longitudinal direction of the mast (2) are formed with section strips (87) standing proud of the base (82) of the elongate sections (88) when the two elongate sections (80) are joined to one another to form a hollow section, and the section strips (87) form running surfaces (89) for running wheels (90) of the lift carriage (3) which can be guided and displaced on the mast (2), the two oppositely lying running surfaces (89) of every protuberance (86) extending parallel with one another and in planes perpendicular to the plane of longitudinal symmetry (88), and the running surfaces (89) of the oppositely lying protuberances (86) are aligned flush with one another.

30. Loading/unloading device for shelving as claimed in claim 28, **characterised in that** the elongate sections (80) with a substantially C-shaped cross-section each have a substantially L-shaped projection (91) at its first free end, forming a first surface remote from the plane of longitudinal symmetry (88) as running surfaces (92) for the running wheels (90) of the lift carriage (3) displaced and guided on the mast (2) and another surface containing the plane of longitudinal symmetry (88) as support and/or joint surfaces (93), the two running surfaces (92) of the projections (91) extending parallel with one another and in a plane parallel with the plane of longitudinal symmetry (88).

31. Loading/unloading device for shelving as claimed in claim 30, **characterised in that** the substantially L-shaped projections (91) have longitudinal edges (94) standing proud of their free ends forming the support and/or joint surfaces (93) substantially parallel with the plane of longitudinal symmetry (88), which form a hollow fillet for the weld seam (97) in the joint region (95) between the two butting adjacent elongate sections (80).

32. Loading/unloading device for shelving as claimed in one of claims 28 to 30, **characterised in that,** at their other free ends lying opposite the projections (91), the legs (85) of the elongate sections (80) have longitudinal edges (94) forming support and/or joint surfaces (93) standing proud substantially parallel with the plane of longitudinal symmetry (88), which form a hollow fillet for the weld seam (97) in the other joint region (96) between the two butting adjacent elongate sections (80).

33. Loading/unloading device for shelving as claimed in one of claims 28 to 32, **characterised in that** an open side of the substantially U-shaped protuberances (86) directed towards the plane of longitudinal symmetry (88) is closed by at least one strip-shaped stiffening element (106) overlapping with the side regions adjoining the protuberances (86) and the stiffening elements (106) are non-positively joined to the elongate sections (80) by means of a welded joint.

34. Loading/unloading device for shelving as claimed in of claims 28 to 39, **characterised in that** elongate sections (80) are of a symmetrical design and have a substantially constant wall thickness (102) throughout their cross section.

35. Loading/unloading system for shelving, in which several shelving loading/unloading devices (1) with height and lateral guide elements (20, 24) are guided one after the other on guide tracks and can be displaced along the guide tracks by means of at least one displacement drive (13, 14), and the shelving loading/unloading devices (1) are coupled with one another, **characterised in that** the shelving loading/unloading devices (1) are as claimed in one of claims 1 to 34.

36. Loading/unloading system for shelving as claimed in claim 35, **characterised in that** the shelving loading/unloading devices (1) disposed at a distance apart from one another in the aisle direction (15) are preferably releasably connected to one another by means of support frames (73) disposed between the masts (2) in particular the mat feet (5) and mast heads (6), and the preferably synchronously displaceable load bearing means (4) are disposed facing one another and at least one of the loading/unloading devices (1) incorporates at least one, preferably the bottom and/or top displacement drive (13, 14).

37. Loading/unloading system for shelving as claimed in claim 35, **characterised in that** the shelving loading/unloading devices (1) are retained at a pre-definable distance from one another or can be displaced together at a pre-definable distance and a control system is provided for controlling this distance by controlling the displacement drive (13, 14) of the shelving loading/unloading devices (1) and the displaceable load bearing means (4) are oriented facing away from one another.

## Revendications

1. Serveur pour rayonnages (1) avec un chariot de levage (3) déplaçable dans la direction de la hauteur d'un mât (2) avec des moyens de réception de charge (4), dans lequel le mât (2), avec des mécanismes de roulement (7, 8) disposés à son pied de mât (5) et sa tête de mât (6) est guidé sur des voies de guidage inférieure et supérieure et, le long de la voie de guidage inférieure, un dispositif de déplacement agissant par force est disposé d'une manière déplaçable comme commande de roulement inférieure (13) et, à la voie de guidage supérieure, un dispositif de déplacement agissant par force comme commande de roulement supérieure (14), où les dispositifs de déplacement inférieur et supérieur sont guidés avec des organes de guidage en hauteur et latéraux (20, 24) sur les voies de guidage et sont réalisés d'une manière déplaçable par un dispositif d'entraînement (33) muni d'au moins un galet d'entraînement (37) relativement aux voies de guidage, et les dispositifs de déplacement sont en liaison d'entraînement avec le mât (2), **caractérisé en ce qu'**il est prévu entre les commandes de déplacement guidées d'une manière déplaçable (13, 14) et les mécanismes de roulement (7, 8) respectivement un dispositif de couplage (29) qui comprend au moins deux parties de couplage (28, 40) ajustables l'une par rapport à l'autre à peu près perpendiculairement à l'extension longitudinale de la voie de guidage et au moins une liaison d'accouplement (27) disposée entre les axes d'articulation (42a, 42b) des parties de couplage (28, 40), qui est logé d'une manière pivotante autour d'un des axes d'articulation (42a; 42b) à peu près perpendiculairement à l'extension longitudinale de la voie de guidage par rapport à une partie de couplage (28; 40) et est logé d'une manière déplaçable sur un côté éloigné de cet axe d'articulation (42a; 42b) par un guidage longitudinal (44) s'étendant à peu près parallèlement à l'extension longitudinale du mât (2).

2. Serveur pour rayonnages selon la revendication 1, **caractérisé en ce que** la première partie de couplage (28) côté mât est disposée au mécanisme de roulement (7) et la première partie de couplage (40) côté commande de roulement à la commande de roulement (13) transversalement à la partie de voie de guidage horizontale (19) de la voie de guidage dans la direction du pied de mât (5) ou dans la direction opposée au pied de mât (5).

3. Serveur pour rayonnages selon la revendication 1 ou 2, **caractérisé en ce que** l'autre partie de couplage (28) côté mât est disposée au mécanisme de roulement (7) et des premières parties de couplage (40) côté commande d'entraînement à la commande d'entraînement (14) transversalement à la partie de voie de guidage horizontale (19) de la voie de guidage dans la direction de la tête de mât (6) ou dans la direction opposée à la tête de mât (6).

4. Serveur pour rayonnages selon la revendication 1, **caractérisé en ce que** les voies de guidage inférieure et supérieure sont formées par des rails de roulement inférieur et supérieur (11, 12) d'une section transversale de préférence en forme de I, et qu'au moins un organe de guidage en hauteur (20) et des organes de guidage latéraux (24) d'un premier dispositif de guidage du mécanisme de roulement inférieur (7) s'appliquent à une partie de voie de guidage horizontale (19) d'un brin supérieur (18) et à une partie de voie de guidage verticale (10) d'une nervure (17) du rail de roulement inférieur (11), et des organes de guidage latéraux (24) d'un autre dispositif de guidage du mécanisme de roulement supérieur (8) à une partie de voie de guidage verticale (10) d'une nervure (17) du rail de roulement supérieur (12).

5. Serveur pour rayonnages selon la revendication 1 ou 4, **caractérisé en ce que** chacune des commandes de roulement (13, 14) présente de préférence au moins deux paires, espaces dans la direction de voie (15) l'une de l'autre, d'organes de guidage en hauteur (30) s'appliquant des deux côtés de la nervure (17) des voies de roulement (11, 12) réalisées de préférence en forme de I à des parties de voie de guidage (19, 32) éloignées l'une de l'autre des rails de roulement inférieur et supérieur (11, 12), et au moins un organe d'application (36) s'appliquant à des parties de voie de guidage (32, 19) éloignées l'une de l'autre des rails de roulement inférieur et supérieur (11, 12) et au moins deux paires espacées l'une de l'autre dans la direction de voie (15) d'organes de guidage latéraux (31) s'appliquant à des parties de voie de guidage opposées (10) de la nervure (17).

6. Serveur pour rayonnages selon l'une des revendications 1 à 5, **caractérisé en ce que** les organes de guidage en hauteur (30) s'appliquant d'une manière roulante aux parties de voie de guidage (19, 32) et les organes d'application (36) s'appliquant par pression aux parties de voie de guidage (32, 19) sont formés par des galets de guidage en hauteur et galets de pression tournant autour d'axes (34)s'étendant transversalement à l'extension longitudinale des rails de roulement (11, 12) et les organes de guidage latéraux roulants (31) par des galets de guidage latéraux tournant autour d'axes de rotation (35) s'étendant perpendiculairement à l'extension longitudinale des rails de roulement (11, 12).

7. Serveur pour rayonnages selon la revendication 1, **caractérisé en ce que** les organes de guidage en hauteur et latéraux (30, 31) des commandes de roulement (13, 14) sont formés par des baguettes de guidage applicables aux parties de voie de guidage (19, 32, 10) des rails de roulement (11, 12) avec une force d'application prédéfinissable.

8. Serveur pour rayonnages selon la revendication 5, **caractérisé en ce que** les commandes de roulement (13, 14) présentent au moins un galet d'entraînement mené (37) et au moins une contre-roue ou un autre galet d'entraînement mené (37), qui sont appliqués par pression respectivement aux parties de voie de guidage opposées (10) des baguettes (17) des rails de roulement (11, 12), et **en ce que** le galet d'entraînement (37) et la contre-roue ou l'autre galet d'entraînement (37) sont disposés entre les organes de guidage en hauteur (30) situés les uns derrière les autres.

9. Serveur pour rayonnages selon la revendication 1, **caractérisé en ce que** les organes de guidage en hauteur et/ou latéraux (30, 31) des commandes de roulement (13, 14) sont disposés respectivement sur un châssis de support commun et que les organes de guidage en hauteur et/ou latéraux (30, 31) sous l'effet d'au moins une force d'application agissant sur le châssis de support, peuvent être pressés contre les parties de voie de guidage (19, 32, 10) des voies de guidage.

10. Serveur pour rayonnages selon l'une des revendications 1 à 9, **caractérisé en ce que** les organes de guidage en hauteur et latéraux et d'application (20, 24; 31, 36) des mécanismes de roulement (7, 8) et les commandes de roulement (13, 14) sont formés par des élastomères, de préférence des matières thermoplastiques, ou bien en acier avec une enveloppe en matériau synthétique entourant ceux-ci.

11. Serveur pour rayonnages selon la revendication 1, **caractérisé en ce que** le mât (2) est sensiblement d'aplomb, et **en ce que** les commandes de roulement inférieure et supérieure (13, 14) sont disposées de préférence à un côté arrière du mât (2) l'une au-dessus de l'autre.

12. Serveur pour rayonnages selon la revendication 1, **caractérisé en ce que** les commandes de roulement (13, 14) et le mât (2) forment avec les mécanismes de roulement (7, 8) respectivement une unité constructive propre et **en ce que** les mécanismes de roulement (7, 8) pouvant être chargés par une force de poussée par la partie de couplage (28) sont reliés de préférence relâchablement aux commandes de roulement (13, 14).

13. Serveur pour rayonnages selon la revendication 1, **caractérisé en ce que** les mécanismes de roulement non entraînés (7, 8) sont formés par le mât (2), ou bien que ceux-ci sont reliés rigidement au pied du mât (5) ou à la tête du mât (6).

14. Serveur pour rayonnages selon l'une des revendications 1 à 13, **caractérisé en ce que** les mécanismes de roulement (7, 8) présentent chacun un faux-châssis apte à pivoter autour de son axe médian s'étendant transversalement à la direction de voie (15) et **en ce que** le faux-châssis (46) entourant les rails de roulement (11, 12) au moins partiellement est réalisé en section transversale à peu près en forme de U et présente à ses branches (47) s'étendant de préférence parallèlement à la nervure (17) les organes de guidage latéraux (24) s'appliquant aux parties de voie de guidage (10) des nervures (17).

15. Serveur pour rayonnages selon la revendication 14, **caractérisé en ce que** les faux-châssis (46) des mécanismes de roulement (7, 8) supportant les organes de guidage latéraux (24), lors d'une position inclinée du mât (2), peuvent être amenés par des moyens, en particulier des moyens de rappel (50) actionnables d'une manière mécanique et/ou électrique et/ou hydraulique et/ou pneumatique automatiquement dans une position horizontale prédéfinissable.

16. Serveur pour rayonnages selon la revendication 14 ou 15, **caractérisé en ce qu'**une base (48) s'étendant entre les branches (47) présente à son côté inférieur orienté vers la partie de voie de guidage horizontale (19) au moins une baguette de raclage (49) adaptée à la partie de voie de guidage (19) et s'appliquant à celle-ci et produisant dans la direction du rail de roulement (11, 12) une force d'application.

17. Serveur pour rayonnages selon la revendication 1, **caractérisé en ce que** les commandes de roulement (13, 14) sont reliées par le dispositif de couplage (29) au moins dans la direction de voie (15) sans jeu au pied de mât (5) et à la tête de mât (6) et/ou aux mécanismes de roulement (7, 8), de préférence amoviblement.

18. Serveur pour rayonnages selon la revendication 1, **caractérisé en ce que** le dispositif de couplage (29) présente au moins une, de préférence deux liaisons de couplage (27) espacées transversalement à l'extension longitudinale des voies de guidage et logées d'une manière pivotante autour des parties de couplage (40) côté commande d'entraînement, en particulier des parties de joue (41) qui sont réalisées de préférence en une forme à peu près triangulaire.

19. Serveur pour rayonnages selon la revendication 18, **caractérisé en ce que** la partie de joue (41) présente à ses zones de coin orientées vers le mécanisme de roulement (7, 8) respectivement un organe de guidage (43) logé d'une manière pivotante à celles-ci et à peu près dans la zone d'un centre de gravité de la partie de joue (41), au moins un autre organe de guidage (43) ajustable par rapport à celles-ci.

20. Serveur pour rayonnages selon la revendication 1, **caractérisé en ce que** la partie de couplage (28) présente deux guidages longitudinaux (44) semblables à des profilés espacés l'un de l'autre avec des voies de guidage (45) formées par ceux-ci, qui correspondent avec des organes de guidage (43) disposées aux parties de joue (41) pour le guidage du mât (2) dans sa direction longitudinale.

21. Serveur pour rayonnages selon la revendication 1, **caractérisé en ce que** la liaison de couplage (27) est formée par une articulation coudée en forme de fourche ou de tige ou une commande de positionnement pouvant être commandée d'une manière mécanique et/ou électrique, en particulier une commande de tige filetée modifiable en longueur.

22. Serveur pour rayonnages selon la revendication 1, **caractérisé en ce qu'**il est disposé entre le pied de mât (5) et le rail de roulement inférieur (11) et entre la tête de mât (6) et le rail de roulement supérieur (12) respectivement au moins une protection (65) contre un relevage.

23. Serveur pour rayonnages selon la revendication 22, **caractérisé en ce que** le mécanisme de roulement (7, 8) est muni de la protection (65) contre le relevage, en forme d'étrier, entourant par zone le rail de roulement (11, 12), et celle-ci, à ses zones d'extrémité d'étrier libres, présente des éléments d'appui (67), comme des patins, des roues, et **en ce qu'**en cas de position inclinée du mât (2) au-delà d'une valeur limite prédéfinie, les éléments d'appui (67) s'appuient à des parties de voie de guidage (32) éloignées l'une de l'autre des rails de roulement inférieur et supérieur (11, 12).

24. Serveur pour rayonnages selon la revendication 1, **caractérisé en ce qu'**est associé au serveur pour rayonnages (1) dans la zone du mât (2) et/ou des mécanismes de roulement (7, 8) et/ou des commandes d'entraînement (13, 14) et/ou du moyen de réception de charge (4) au moins un système de détection de position (74) au moyen duquel peut être constaté l'emplacement du serveur pour rayonnages (1) dans la zone de travail et/ou la position du chariot de levage (3) et/ou du moyen de réception de charge (4).

25. Serveur pour rayonnages selon la revendication 1, **caractérisé en ce qu'**est associée au serveur pour rayonnages (1) dans la zone du chariot de levage (3) et/ou des mécanismes de roulement (7, 8) et/ou des commandes d'entraînement (13, 14) au moins une caméra (CCD) ou un agencement de capteurs.

26. Serveur pour rayonnages selon la revendication 1, **caractérisé en ce que** le chariot de levage (3) est guidé sensiblement sans jeu avec des organes de guidage en hauteur et latéraux (53) sur au moins une voie de guidage (54) au mât (2), et **en ce que** le moyen de réception de charge (4) est orienté perpendiculairement au mât (2) et, pour la détection d'un écart du moyen de réception de charge (4) de son orientation horizontale, il est prévu au chariot de levage (3) ou au moyen de réception de charge (4) au moins un agencement de capteur (76) et un dispositif de régulation détectant une valeur réelle pour le réglage de l'orientation horizontale du moyen de réception de charge (4) par la commande d'au moins une commande de roulement (13; 14).

27. Serveur pour rayonnages selon l'une des revendications 1 à 10, **caractérisé en ce qu'**une charge (9) à relever par le chariot de levage (3) est détectée par des organes de mesure de poids, en particulier une cellule de pesage et, par une installation de régulation, une force d'application variable des galets d'entraînement (37) et/ou des organes d'entraînement (36) des commandes de roulement (13, 14) est réglée par des éléments de positionnement mécaniques et/ou électromagnétiques pouvant être commandés, comme une tige filetée et/ou l'inclinaison du mât (2) peut être réglée par une modification de la position des commandes de roulement (13, 14) disposées l'une au-dessus de l'autre en fonction du couple agissant sur celui-ci.

28. Serveur pour rayonnages selon la revendication 1, **caractérisé en ce que** le mât est formé par au moins deux profilés longitudinaux en forme de demi-coque (80) d'une section transversale à peu près en forme de C, et qu'une largeur (81) d'une base (82) de la section transversale en forme de C est plus grande qu'une hauteur (83) de branches (85) à peu près perpendiculaires à celle-ci, et ces profilés longitudinaux (80) sont reliés dans un plan de jonction parallèle à l'axe et renfermant un plan de symétrie longitudinal (88) du mât (2) et/ou les profilés longitudinaux (80) sont assemblés par force par une jonction par brasage.

29. Serveur pour rayonnages selon la revendication 28, **caractérisé en ce que** sont réalisés aux deux profilés longitudinaux (80) reliés en un profilé creux des bombements (86) à peu près en forme de U, dirigés vers l'extérieur, s'étendant dans la direction longitudinale du mât (2), avec des bandes profilées (87) faisant saillie de la base (82) des profilés longitudinaux (80) et que les bandes profilées (87) réalisent des faces de roulement (89) pour des roues de roulement (90) du chariot de levage (3) guidé d'une manière ajustable au mât (2), où les deux faces de roulement (89) opposées l'une à l'autre de chaque bombement (86) s'étendent parallèlement l'une à l'autre et dans des plans perpendiculaires au plan de symétrie longitudinal (88), et les faces de roulement (89) des bombements opposés (86) d'une manière alignée.

30. Serveur pour rayonnages selon la revendication 28, **caractérisé en ce que** chacun des profilés longitudinaux (80) en section transversale à peu près en forme de C réalise à l'une de ses premières extrémités libres un prolongement (91) à peu près en forme de L qui forme une première face, éloignée du plan de symétrie longitudinal (88), comme face de roulement (92) pour les roues de roulement (90) du chariot de levage (3) guidé d'une manière ajustable au mât (2) et une autre face orientée vers le plan de symétrie longitudinal (88), renfermant celui-ci, comme faces d'appui et/ou de liaison (93), où les deux faces de roulement (92) des prolongements (91) s'étendent parallèlement l'une à l'autre et dans un plan parallèle au plan de symétrie longitudinal (88).

31. Serveur pour rayonnages selon la revendication 30, **caractérisé en ce que** les prolongements (91) à peu près en forme de L présentent à leurs extrémités libres des bords longitudinaux (94) en saillie à peu près parallèlement au plan de symétrie longitudinal (88), formant les faces d'appui et/ou de liaison (93), qui réalisent dans l'autre zone de liaison (95) entre les deux profilés longitudinaux bout à bout (80) une gorge creuse pour la jonction de brasage (97).

32. Serveur pour rayonnages selon l'une des revendications 28 à 30, **caractérisé en ce que** les branches (85) des profilés longitudinaux (80) présentent à leurs autres extrémités libres, opposées aux prolongements (91), des bords longitudinaux (94) faisant saillie à peu près parallèlement vers le plan de symétrie longitudinal (88), formant les faces d'appui et/ou des liaisons (93) qui, dans la zone de liaison suivante (96) entre les deux profilés longitudinaux (80) mis bout à bout, forment une gorge creuse pour la jonction de brasage (97).

33. Serveur pour rayonnages selon l'une des revendications 28 à 32, **caractérisé en ce qu'**un côté ouvert orienté vers le plan de symétrie longitudinal (88) des bombements (86) à peu près en forme de U est fermé respectivement au moins par un élément de rigidification en forme de bande (106) faisant saillie sur les zones de connexion latérales aux bombements (86), et **en ce que** les éléments de rigidification (106) sont reliés par une jonction de brasage par force aux profilés longitudinaux (80).

34. Serveur pour rayonnages selon l'une des revendications 28 à 30, **caractérisé en ce que** les profilés longitudinaux (80) sont réalisés d'une manière symétrique et présentent sur la section transversale une épaisseur de paroi (102) qui reste à peu près constante.

35. Installation de commande de rayonnages, dans laquelle plusieurs serveurs de rayonnages (1) disposés les uns derrière les autres sont guidés avec des organes de guidage en hauteur et latéraux (20, 24) sur des voies de guidage et sont déplaçables par au moins une commande de roulement (13, 14) le long des voies de guidage, où les serveurs pour rayonnages (1) sont couplés les uns aux autres, **caractérisée en ce que** les serveurs pour rayonnages (1) sont réalisés selon l'une des revendications 1 à 34.

36. Installation de commande de rayonnage selon la revendication 35, **caractérisée en ce que** les serveurs pour rayonnages (1) disposés dans la direction des voies (15) à distance les uns des autres sont reliés par des châssis de support (73) prévus entre les mâts (2), en particulier les pieds de mât (5) et les têtes de mât (6), de préférence amoviblement, et **en ce que** les moyens de réception de charge (4) ajustables de préférence d'une manière synchrone sont orientés les uns vers les autres, et **en ce qu'**au moins l'un des serveurs pour rayonnages (1) présente au moins une, de préférence parmi la commande de roulement inférieure et/ou supérieure (13, 14).

37. Installation de commande de rayonnages selon la revendication 35, **caractérisée en ce que** les serveurs pour rayonnages (1) sont retenus à une distance prédéterminée les uns des autres et/ou sont déplaçables conjointement à une distance prédéterminée, et **en ce qu'**il est prévu une installation de régulation pour réguler cet écart par la commande des commandes de roulement (13, 14) des serveurs pour rayonnages (1), et **en ce que** les moyens de réception de charge ajustables (4) sont éloignés les uns des autres.
